# EUROPEAN PATENT APPLICATION

(11) **EP 2 237 618 A1**
(43) Date of publication of application: **06.10.2010**
(21) Application number: 10170309.8
(22) Date of filing: 29.09.2008
(51) Int. Cl.: H04W 48/08, H04W 48/02

(54) **Equivalent home ID for mobile communications**

(30) Priority: 01.10.2007 US 976738 P; 26.09.2008 US 239509
(62) Divisional of application: 08836306.4
(71) Applicant: Qualcomm Incorporated, San Diego, CA 92121-1714 (US)
(72) Inventor: Gholmieh, Aziz, San Diego, CA, 92121 (US); Grilli, Francesco, San Diego, CA, 92121 (US); Tenny, Nathan Edward, San Diego, CA, 92121 (US); Zreiq, Samer S., San Diego, CA, 92121-1714 (US); Nizri, Shlomo, San Diego, CA, 92121-1714 (US)
(74) Representative: Wegner, Hans

(57) **Abstract**

Facilitating user terminal (UT) access to wireless networks having disparate types of base stations (BSs) is described herein. By way of example, a distinct identifier (ID) can be reserved for a particular type of network access point (e.g., restricted or general access, full or fractional re-use, transmit power, cell size, etc.). The distinct ID can be broadcast by such access points, identifying the access point type. In some aspects, the distinct ID can be unicast to a terminal that is within a predetermined region of the network. Thus, at least within such region, the terminal can be directed to search for or handoff to a preferred type of access point (such as a home Node B). In such aspects, by providing regional-specific access, the subj ect disclosure can significantly reduce overhead signaling outside a home region where a home or preferred access point is expected to be found.

## Description

### Claim of Priority under 35 U.S.C. §119

The present Application for Patent claims priority to U.S. Provisional Application No. 60/976,738 entitled METHODS, APPARATUS, AND SYSTEM FOR SUPPORTING ACCESS POINT BASE STATIONS WITHIN A WIRELESS WAN SYSTEM filed October 1, 2007, assigned to the assignee hereof and hereby expressly incorporated by reference herein.

### Reference to Co-Pending Applications for Patent

The present Application for Patent is related to the following co-pending U.S. Patent Application "MOBILE ACCESS IN A DIVERSE ACCESS POINT NETWORK" by Aziz Gholmieh *et al*., having Attorney Docket No. 072497(QUAFP1280US), filed concurrently herewith, assigned to the assignee hereof and expressly incorporated by reference herein.

### BACKGROUND

### I. Field

The following disclosure relates generally to wireless communication, and more specifically to managing remote access for devices in a diverse access point environment.

### II. Background

Wireless communication systems are widely deployed to provide various types of communication (*e.g*., voice, data, multimedia services, *etc.)* to multiple users. Subscription based services allow users to access and utilize various communication content over a service provider's network. As the demand for high-rate and multimedia data services rapidly grows, there lies a challenge to implement efficient and robust communication systems with enhanced performance.

Traditional fixed line communication systems, such as digital subscriber line (DSL), cable line, dial-up, or like connections offered by Internet service providers (ISPs), are alternative and sometimes competing communication platforms to wireless communications. However, in recent years users have begun replacing fixed line communications with mobile communications. Several advantages of mobile communication systems, such as user mobility, small relative size of user equipment (UE), and ready access to public switched telephone networks as well as the Internet, have made such systems very convenient and thus very popular. As users have begun relying more on mobile systems for communication services traditionally obtained through fixed line systems, demand for increased bandwidth, reliable service, high voice quality and low prices has heightened.

In addition to mobile phone networks currently in place, a new class of small base stations has emerged. These small base stations are low power and can typically utilize fixed line communications to connect with a mobile operator's core network. In addition, these base stations can be distributed for personal/private use in a home, office, apartment, private recreational facility, and so on, to provide indoor/outdoor wireless coverage to mobile units. These personal base stations are generally known as access point base stations, or, alternatively, as home Node B units (HNBs) or Femto cells. Femto cell base stations offer a new paradigm in mobile network connectivity, allowing direct subscriber control of mobile network access and access quality.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

The subject disclosure provides for identifying select groups of access points in a wireless network. In some aspects, a public land mobile network (PLMN) identifier (ID) can be reserved for a selected category of such access points. The access points can, in at least one aspect, be categorized as a function of access type, re-use type, transmit power, cell size, or the like, or a combination thereof. Additionally, within the reserved PLMN ID, regional groups of the selected access points can be established as a function of geographic or network region and associated with an ID (*e.g*., a registration area identifier, tracking area identifier, routing area identifier, location area identifier, and so on). If a mobile terminal enters a home region (*e.g*., determined *via* the ID), the reserved PLMN ID can be provided to the mobile terminal from the network. In particular aspects, the reserved PLMN ID can be established as an equivalent of an operator's PLMN ID, enabling the mobile terminal to search for, access and/or handoffto the select access points as if they are part of the operator's PLMN ID. Thus, when the mobile terminal is within the home region, selected access points are viewed as equivalent to the operator's access points. When not within the home region, access points of the reserved PLMN ID can be viewed as separate, and treated different from the operator's access points, ignored, or the like.

In addition to the foregoing, the subject disclosure provides for reduced signaling for mobile terminals in a restricted access (RA) base station (BS) environment. A home BS that provides network access to the mobile terminal can be associated with a home region that encompasses a position location of the BS. Additionally, the home BS can be associated with a reserved PLMN ID pertaining to selected access points of the home region (*e.g*., identified by a category of BS or network cell). When a mobile terminal enters the home region, the reserved PLMN ID is received from the network enabling the terminal to search for, access and/or handoff to RA BSs. Thus, outside the home region, RA BSs can be ignored to preserve signaling overhead.

To preserve signaling overhead within the home region, a cell identifier and/or position location of the BS can be tracked when an access request to the network is denied. According to further aspects, the terminal can refrain from accessing BSs associated with the reserved PLMN ID for a delay period, to prevent excessive signaling to RA BSs. Where access is provided to the mobile terminal, a cell identifier and/or position location can be tracked to identify the cell and/or location of the cell for future access. Accordingly, the terminal can distinguish terminals that will restrict network access from those that will grant access, greatly reducing potential BS signaling in densely deployed environments.

According to still other aspects, a set of parameters can be received from the network that increases a likelihood of identifying, accessing and/or handing off to a select category of BS. When the mobile terminal encounters the home region, parameters are provided that increase a likelihood of encountering a type(s) of BS similar to a home BS (*e.g*., a home Node B [HNB]). Thus, the terminal is less likely to camp on a macro network, for instance, within the home region, and more likely to identify the home BS or a select type of BS.

According to one or more additional aspects described herein, disclosed is a method of providing regional access in a wireless network. The method can comprise obtaining subscriber profile information pertaining to a user terminal (UT) and extracting data representing a network region from the information. Additionally, the method can comprise comparing the network region to data associated with a cell of a wireless network and submitting an identifier associated with selected access points of the wireless network to the UT if the network region matches a network region of the cell.

In other aspects, disclosed is an apparatus that provides selective regional access to a wireless network. The apparatus can comprise a query module that obtains subscriber profile information pertaining to a UT. Further, the apparatus can comprise an analysis module that extracts data representing a network region from the information, and compares the extracted network region to data associated with a cell of a wireless network. In addition to the foregoing, the apparatus can comprise a communication processor that submits an identifier associated with selected access points of the wireless network to the UT if the network region matches a region of the cell.

In one or more additional aspects, disclosed is an apparatus that provides regional access in a wireless network. The apparatus can comprise means for obtaining subscriber profile information pertaining to a UT and means for extracting data representing a network region from the information. Additionally, the apparatus can comprise means for comparing the network region to data associated with a cell of a wireless network and means for submitting an identifier associated with selected access points of the wireless network to the UT if the network region matches a network region of the cell.

In yet other aspects, disclosed is a processor configured to provide regional access in a wireless network. The processor can comprise a first module that obtains subscriber profile information pertaining to a UT and a second module that extracts data representing a network region from the information. Furthermore, the processor can comprise a third module that compares the network region to data associated with a cell of a wireless network. The apparatus can additionally comprise a fourth module that submits an identifier associated with selected access points of the wireless network to the UT if the network region matches a network region of the cell.

In still other aspects, disclosed is a computer program product comprising a computer-readable medium. The computer-readable medium can comprise a first set of codes for causing a computer to obtain subscriber profile information pertaining to a UT and a second set of codes for causing the computer to extract data representing a network region from the information. Moreover, the computer-readable medium can comprise a second set of codes for causing the computer to compare the network region to data associated with a cell of a wireless network. In addition to the foregoing, the computer-readable medium can comprise a third set of codes for causing the computer to submit an identifier associated with selected access points of the wireless network if the network region matches a network region of the cell.

According to other aspects of the subject disclosure, provided is a method for obtaining regional access to a wireless network. The method can comprise obtaining an identifier associated with a particular type of wireless network access point. In at least one aspect, the method can further comprise selecting an access point associated with the identifier to access the wireless network if a current region of a requesting device matches a region of the selected access point.

According to some aspects, provided is a UT configured to obtain regional access to a wireless network. The UT can comprise a signal processor that obtains an identifier associated with a particular type of wireless network access point. Moreover, the UT can comprise an access module that selects an access point associated with the identifier to access the wireless network if a region in which the UT is located matches a region of the selected access point.

According to additional aspects, provided is an apparatus configured to obtain regional access to a wireless network. The apparatus can comprise means for obtaining an identifier associated with a particular type of wireless network access point. Additionally, the apparatus can comprise means for selecting an access point associated with the identifier to access the wireless network if a current region of a requesting device matches a region of the selected access point.

In yet other aspects of the subject disclosure, provided is a processor configured to obtain regional access to a wireless network. The processor can comprise a first module configured to obtain an identifier associated with a particular type of wireless network access point. Further, the processor can comprise a second module configured to select an access point associated with the identifier to access the wireless network if a current region of a requesting device matches a region of the selected access point.

According to further aspects, disclosed is a computer program product comprising a computer-readable medium. The computer-readable medium can comprise a first set of codes for causing a computer to obtain an identifier associated with a particular type of wireless network access point. The computer-readable medium can further comprise a second set of codes for causing the computer to select an access point associated with the identifier to access the wireless network if a current region of a requesting device matches a region of the selected access point.

To the accomplishment of the foregoing and related ends, the one or more aspects comprise the features hereinafter fully described and particularly pointed out in the claims. The following description and the annexed drawings set forth in detail certain illustrative aspects of the one or more aspects. These aspects are indicative, however, of but a few of the various ways in which the principles of various aspects can be employed and the described aspects are intended to include all such aspects and their equivalents.

### BRIEF DESCRIPTION OF THE DRAWINGS

**Fig. 1** depicts a block diagram of an example wireless communication environment according to aspects of the subject disclosure.

**Fig. 2** illustrates a block diagram of a sample wireless network comprising restricted access (RA) base stations (BSs) according to other aspects.

**Fig. 3** depicts a block diagram of an example system that provides mobile device access in a disparate access point network according to some aspects.

**Fig. 4** illustrates a block diagram of a sample system that obtains subscriber profile data to facilitate regional access according to some aspects.

**Fig. 5** depicts a block diagram of an example networking environment comprising regional RA BSs and general access (GA) macro BSs.

**Fig. 6** illustrates a block diagram of a sample parameterization record for weighting a likelihood of searching or accessing one or more categories of BSs.

**Fig. 7** illustrates a block diagram of an example base station that provides regional access to UTs according to aspects of the subject disclosure.

**Fig. 8** depicts a block diagram of a sample UT that facilitates regional restricted network access according to other aspects.

**Fig. 9** depicts a flowchart of a sample methodology for providing regional access to select categories of BSs according to some aspects.

**Fig. 10** depicts a flowchart of an example methodology for facilitating reduced signaling in dense deployments of different categories of BSs.

**Fig. 11** illustrates a flowchart of an example methodology for accessing a network based on regional groups of select BSs according to aspects disclosed herein.

**Fig. 12** depicts a flowchart of a sample methodology for facilitating reduced signaling overhead in dense deployments of disparate categories of BSs.

**Figs. 13** and **14** illustrate block diagrams of example systems providing and facilitating, respectively, regional access to select types of network BSs.

### DETAILED DESCRIPTION

Various aspects are now described with reference to the drawings, wherein like reference numerals are used to refer to like elements throughout. In the following description, for purposes of explanation, numerous specific details are set forth in order to provide a thorough understanding of one or more aspects. It can be evident, however, that such aspect(s) can be practiced without these specific details. In other instances, well-known structures and devices are shown in block diagram form in order to facilitate describing one or more aspects.

In addition, various aspects of the disclosure are described below. It should be apparent that the teaching herein can be embodied in a wide variety of forms and that any specific structure and/or function disclosed herein is merely representative. Based on the teachings herein one skilled in the art should appreciate that an aspect disclosed herein can be implemented independently of any other aspects and that two or more of these aspects can be combined in various ways. For example, an apparatus can be implemented and/or a method practiced using any number of the aspects set forth herein. In addition, an apparatus can be implemented and/or a method practiced using other structure and/or functionality in addition to or other than one or more of the aspects set forth herein. As an example, many of the methods, devices, systems and apparatuses described herein are described in the context of implementing improved base station (BS) access in a wireless environment comprising disparate types of access points. One skilled in the art should appreciate that similar techniques could apply to other communication environments.

Development of wireless access points to communication networks have been one solution offered to effect convergence between traditional wireless communication systems and traditional fixed-line communication systems. The convergence, otherwise known as fixed-wireless convergence, involves a degree of interoperability between fixed line networks (*e.g*., intranet, Internet, *etc*.) and mobile communication networks (*e.g*., cellular phone networks). An access point, as utilized herein, includes any suitable node, router, switch, hub, or the like, configured to communicatively couple a user terminal (UT) with a communication network. The access point can be wired (*e.g*., employing Ethernet, universal serial bus [USB] or other wired connection for communication), wireless (*e.g*., employing radio signals for communication), or both. Examples of access points include access point base stations (BSs), wireless local area network (WLAN) access points, wireless wide area network (WWAN) access points, including worldwide interoperability for microwave access (WiMAX) BSs, and the like. Access point BSs comprise access points to a mobile communication operator's network, such as a circuit-switched voice network, a combined circuit-switched and packet-switched voice and data network, or all-packet voice and data network, or the like. Examples of an access point BS (referred herein in the alternative as a BS) include a Node B (NB), base transceiver station (BTS) a home Node B (HNB), a home eNode B (HeNB), or simply a BS, of various transmit power/cell size including macro cells, micro cells, pico cells, Femto cells, *etc.*

The introduction of various types of access point BSs into traditional macro BS networks enables significant flexibility and consumer control over personal access to such networks. Users can often configure terminal devices to select a nearby access point BS or a macro network BS, depending on which provides a better signal. In addition, access point BSs can provide preferable rate plans compared with the macro network, at least in some circumstances, enabling users to reduce usage charges.

As wireless communication bandwidth and data rates have increased over time, and as UT processing and user interface capabilities have become more sophisticated, users are able to employ mobile devices to perform functions formerly available only with personal computers and fixed line communications. However, because typical macro networks are often deployed with large-scale public usage as the primary market, indoor reception can often be poorer than outdoor reception (*e.g*., due to absorption of radio frequency signals by buildings, insulation, ground landscaping, *etc*.), rendering a mobile device less effective than a fixed-line computer in such an environment. Access point BSs can provide significant improvement in this environment, however. As one example, HNB and HeNB technology (hereinafter referred collectively as HNB) provide a user with significant control over personal wireless connectivity, indoors and outdoors, often obviating most or all such connectivity problems. HNBs, therefore, can further extend UT mobility even in a sub-optimal environment for macro networks.

Despite the significant advantages of HNB and other access point deployments, some problems have resulted due to added complexity in coupling access point BSs with an operator's macro networks. For instance, access point deployment, especially in the case of HNBs, is typically un-planned or semi-planned, meaning that these BSs are installed outside of the control of the network operator. Thus, the operator has limited capacity to implement ideal placement of these access points relative other such access points or relative macro BSs. Furthermore, spatial shaping of wireless signals relative other access point cells, or even precise knowledge of position location of such access point cells can be severely limited. In addition, where HNB deployment is open to consumer purchase and installation, a very dense installation of such cells can occur in high population urban or commercial areas, leading to wireless resource competition among nearby HNB and macro cells. Furthermore, HNBs are typically associated with a closed subscriber group (CSG) and provide network access only to members of the CSG; access is not provided to the general cellular public, for instance. Thus, an HNB deployment amid a macro network integrates restricted access (RA) BSs with general access (GA) BSs.

Many legacy UTs are not equipped to distinguish GA and RA BSs, especially if such BSs both utilize cellular frequencies, and therefore can spend significant power searching for and attempting to access RA BSs that deny service to a UT. Additionally, legacy terminals and legacy wireless networking standards require mobile terminals to scan incoming wireless signals to identify optimal signals. Where there are only a few nearby BSs that the terminal can distinguish, this is typically a workable process. However, in dense access point deployments, dozens or hundreds of access points can exist in close proximity (*e.g*., within a large urban apartment building). If a UT's home access point, having a CSG that includes the UT, is within the dense deployment, distinguishing the home access point from hundreds or thousands of nearby foreign access points can be a significant problem. For instance, the UT is likely to utilize significant power camping on (analyzing pilot and control channels) or signaling foreign access points that will deny network access to the UT.

Where the UT is not in a region that includes a home access point, the problem becomes distinguishing RA BSs from general access (GA) BSs, and ignoring the RA BSs. Access points that utilize different frequencies from the macro network, such as WiFi and WiMAX access points, can typically be distinguished through frequency filtering. However, HNBs often share macro network frequencies, and thus are not so easily distinguished. Thus, a need exists for distinguishing HNB BSs from macro network BSs. In addition, it can be beneficial to limit UT signaling to RA BSs when a home BS is not likely to be found. Furthermore, it can be beneficial to increase a likelihood of signaling or searching for RA BSs where the home BS is expected to be found, and to mitigate redundant signaling to foreign HNBs. Aspects of the subject disclosure can provide improvement to many of the foregoing problems.

The subject disclosure provides improved efficiency for UT access in an integrated, or heterogeneous, wireless access point deployment. Efficiency can result from reduced overhead signaling by distinguishing accessible access points from inaccessible access points. For instance, access point BSs can be associated with identifiers (IDs) reserved for a particular type of access point. Such a BS can broadcast an ID(s) with pilot/acquisition signals transmitted within a cell served by the BS. Accordingly, a UT receiving the pilot/acquisition signals can identify a particular type of access point based on the included ID. A suitably configured UT can then selectively interact with access points based on ID type.

To illustrate the foregoing, one example implementation can include establishing a set of distinct public land mobile network (PLMN) IDs for particular types of network access points. For instance, different PLMN IDs can be reserved for HNBs, WiMAX access points, WiFi access points and/or like access points that provide wireless access to a core mobile communication network (*e.g*., a third generation partnership project [3GPP] network). Access points can broadcast the associated reserved PLMN ID to notify remote terminals of access point type. Terminals configured to distinguish access points by type can select a particular type of access point to camp on or request services from. Alternatively, or in addition to the foregoing, the reserved PLMN ID can be sent by a network as an equivalent of an operator's PLMN ID. A terminal can then camp on and/or request service from access points associated with the equivalent PLMN ID as if such access points were associated with the operator's PLMN ID. In such a manner, legacy terminals not configured to employ an ID to distinguish types of access points can effectively interact only with particular access points (*e.g*., associated with an active subscription) based on the equivalent, reserved PLMN ID provided by the network.

In addition to the foregoing, network regions can be defined to distinguish portions of an access point network based on geographic area, network area, routing area, registration area, or the like. Thus, for instance, a deployment of HNBs within a country could be segmented into various geographic regions of the country, where HNBs within a particular geographic region are associated with a registration area ID. Thus, in some instances, regions can be established based on geographic boundaries (*e.g*., latitudes/longitudes, topographical features such as lakes, rivers, mountains, oceans, canyons, *etc*.) or legal/political boundaries (*e.g*., municipalities, counties, states, provinces, and so on). Alternatively, or in addition, regions can be established on network boundaries (*e.g*., a Registration Area Identifier, location area identifier [LAI], routing area identifier [RAI], tracking area identifier [TAI]). Thus, for instance, regions can be established based on network access areas, network registration areas, network tracking areas, network location areas, or the like.

In addition to the foregoing, where an access point network comprises home, preferred and/or restricted BSs (*e.g*., a home HNB), a home region(s) can be established for the UT, defining a network and/or geographic region in which the UT can expect to encounter the home/preferred/non-restricted access point. Thus, a region in which a subscriber's home HNB resides can be established as a home region/area. When the UT is within the home region, a particular type of access point comprising the home access point can be included in network interface functions (*e.g*., cell search, handoff and/or access request functions). Thus, for instance, where a UT enters a region that includes a home HNB, the UT can include HNBs in such functions. In other regions, HNBs can be ignored, reducing signaling overhead in non-home regions. As discussed above, the HNBs can be identified based on a reserved PLMN ID associated with HNBs, or based on the reserved PLMN ID being established as an operator equivalent, or both.

To enhance a likelihood of identifying home/preferred access points, the subject disclosure provides for device parameterization that weights a likelihood of searching for, camping on, or handing off to access points based on access point type.
The parameterization can establish a priority hierarchy (*e.g*., a hierarchical cell structure [HCS]) that gives relative priority to access points and/or frequency channels associated with a particular access point ID (*e.g.,* HNB ID, WiFi ID, macro network ID, *etc*.). As a result, when connected to a high priority-type access point, a terminal is less likely to search for other access points of lower priority, search on frequencies associated with lower priority access points and/or hand off to lower priority access points. Likewise, when connected to a medium or low priority-type access point, a terminal is more likely to search for, switch channel frequency to and/or hand off to higher priority access points. Such a parameterization can further be utilized to load balance terminals among various types of access points.

According to other aspects of the subject disclosure, a terminal can track access history to further reduce overhead signaling. Thus, where a UT sends a request for services to an access point, and the request is denied, the UT can track a cell ID of the access point, position location of the access point, or other distinguishing information. If the tracked ID/position location is subsequently encountered, the access point can be ignored to avoid wasted signaling.

According to further aspects, the UT can implement a delay period or penalty period, upon receiving an access rejection. The delay/penalty period can involve ignoring access points of the same type or category as the rejecting access point for a predetermined time. This can reduce rapid ping-pong signaling when the UT is proximate foreign HNBs, for instance.

In another aspect, the UT can switch to a frequency channel employed by GA access points upon receiving an access rejection, to increase likelihood of successful access following the rejection. If, on the other hand, an access request is allowed, the UT can first determine whether the connected access point is a GA BS (*e.g*., a macro network BS). If not, the UT can track a cell ID, cell position location, *etc*., of the allowing non-GA access point, since it is not uncommon for home RA BSs to be located near many foreign RA BSs (which will reject access or provided limited access to the UT). The cell ID/position location information can be stored and utilized to identify the allowing access point at a subsequent time. When the allowing non-GA access point is subsequently identified, the access point can be given high priority (*e.g*., as discussed above) or utilized to the exclusion of other access points (at least within a minimum threshold signal strength, signal quality, or the like). By tracking access points that allow and/or that deny access to the UT, significant reduction in wasted signaling can be achieved, providing more efficient mobile communications.

The techniques described herein can be used for various wireless communication systems such as code division multiple access (CDMA), time division multiple access (TDMA), frequency division multiple access (FDMA), orthogonal FDMA (OFDMA), SC-FDMA (single carrier FDMA) and other systems. The terms "system" and "network" are often used interchangeably. A CDMA system can implement a radio technology such as Universal Terrestrial Radio Access (UTRA), CMDA2000, etc. UTRA includes Wideband-CDMA (W-CDMA) and other variants of CDMA. CDMA2000 covers IS-2000, IS-95 and IS-856 standards. A TDMA system can implement a radio technology such as Global System for Mobile Communications (GSM). An OFDMA system can implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM®, *etc.* UTRA and E-UTRA are part of Universal Mobile Telecommunication System (UMTS). LTE (long term evolution) is an upcoming release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). CDMA2000 and UMB are described in documents from an organization named "3rd Generation Partnership Project 2" (3GPP2).

As used in the subject disclosure, the terms "component," "system," "module" and the like are intended to refer to a computer-related entity, either hardware, software, software in execution, firmware, middle ware, microcode, and/or any combination thereof. For example, a module can be, but is not limited to being, a process running on a processor, a processor, an object, an executable, a thread of execution, a program, a device, and/or a computer. One or more modules can reside within a process and/or thread of execution and a module can be localized on one electronic device and/or distributed between two or more electronic devices. Further, these modules can execute from various computer-readable media having various data structures stored thereon. The modules can communicate by way of local and/or remote processes such as in accordance with a signal having one or more data packets (*e.g*., data from one component interacting with another component in a local system, distributed system, and/or across a network such as the Internet with other systems by way of the signal). Additionally, components or modules of systems described herein can be rearranged and/or complemented by additional components/modules/systems in order to facilitate achieving the various aspects, goals, advantages, *etc*., described with regard thereto, and are not limited to the precise configurations set forth in a given figure, as will be appreciated by one skilled in the art.

Furthermore, various aspects are described herein in connection with a user terminal - UT. A UT can also be called a system, a subscriber unit, a subscriber station, mobile station, mobile, mobile communication device, mobile device, remote station, remote terminal, access terminal (AT), user agent (UA), a user device, or user equipment (UE), or the like. A subscriber station can be a cellular telephone, a cordless telephone, a Session Initiation Protocol (SIP) phone, a wireless local loop (WLL) station, a personal digital assistant (PDA), a handheld device having wireless connection capability, or other processing device connected to a wireless modem or similar mechanism facilitating wireless communication with a processing device.

In one or more exemplary embodiments, the functions described can be implemented in hardware, software, firmware, middleware, microcode, or any suitable combination thereof. If implemented in software, the functions can be stored on or transmitted over as one or more instructions or code on a computer-readable medium. Computer-readable media comprises computer-readable hardware, which includes computer storage media and hardware communication media, and communication media including any software, middleware, firmware, microcode and/or hardware medium that facilitates transfer of a computer program from one place to another.

As utilized herein, a computer storage media can be any physical media that can be accessed by a computer. By way of example, and not limitation, such storage media can comprise RAM, ROM, EEPROM, CD-ROM or other optical disk storage, magnetic disk storage or other magnetic storage devices, smart cards, and flash memory devices (*e.g*., card, stick, key drive...), or any other suitable medium that can be used to carry or store program code in the form of instructions or data structures and that can be accessed by a computer. Hardware communication media can include any suitable device or data connection that facilitates transfer of a computer program from one entity to another at least in part utilizing electrical, mechanical and/or electromechanical hardware. In general, a data connection is also properly termed a computer-readable medium. For example, if a program, software or other data is transmitted from a website, server, or other remote source using a coaxial cable, fiber optic cable, twisted pair, digital subscriber line (DSL), communication bus structure, Ethernet, or wireless technologies such as infrared, radio, and microwave, then the coaxial cable, fiber optic cable, twisted pair, DSL, or wireless technologies such as infrared, radio, and microwave are included in the definition of medium, and any suitable hardware components associated with such medium are included in the definition of hardware communication media. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

For a hardware implementation, the processing units' various illustrative logics, logical blocks, modules, and circuits described in connection with the aspects disclosed herein can be implemented or performed within one or more application specific integrated circuits (ASICs), digital signal processors (DSPs), digital signal processing devices (DSPDs), programmable logic devices (PLDs), field programmable gate arrays (FPGAs), discrete gate or transistor logic, discrete hardware components, general purpose processors, controllers, micro-controllers, microprocessors, other electronic units designed to perform the functions described herein, or a combination thereof. A general-purpose processor can be a microprocessor, but, in the alternative, the processor can be any conventional processor, controller, microcontroller, or state machine. A processor can also be implemented as a combination of computing devices, *e.g*., a combination of a DSP and a microprocessor, a plurality of microprocessors, one or more microprocessors in conjunction with a DSP core, or any other suitable configuration. Additionally, at least one processor can comprise one or more modules operable to perform one or more of the steps and/or actions described herein.

Moreover, various aspects or features described herein can be implemented as a method, apparatus, or article of manufacture using standard programming and/or engineering techniques. Further, the steps and/or actions of a method or algorithm described in connection with the aspects disclosed herein can be embodied directly in hardware, in a software module executed by a processor, or in a combination of the two. Additionally, in some aspects, the steps and/or actions of a method or algorithm can reside as at least one or any combination or set of codes and/or instructions on a device-readable medium, machine-readable medium and/or computer-readable medium, which can be incorporated into a computer program product. The term "article of manufacture" as used herein is intended to encompass a computer program accessible from any computer-readable device or media.

Additionally, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion. As used in this application and the appended claims, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

As used herein, the terms to "infer" or "inference" refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

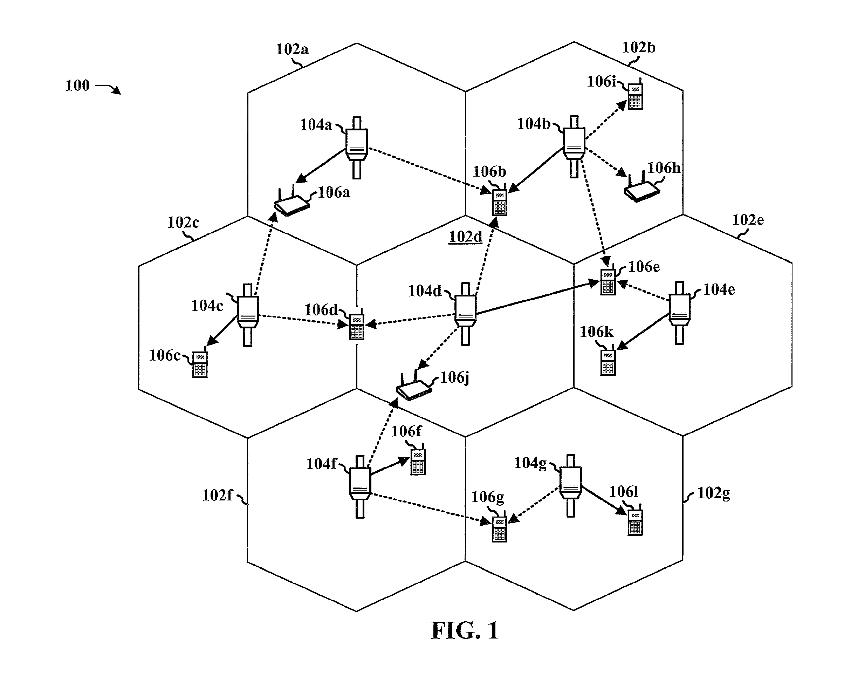

Referring to the drawings, **Fig. 1** illustrates an exemplary wireless communication system 100 configured to support a number of users, in which various disclosed embodiments and aspects can be implemented. As shown in **Fig. 1****,** system 100 provides communication for multiple cells, such as macro cells 102a, 102b, 102c, 102d, 102e, 102f, 102g (alternatively, macro cells 102a-102g), with each cell being serviced by a corresponding access point (AP) 104a, 104b, 104c, 104d, 104e, 104f, 104g (alternatively, APs 104a-104g). Each cell 102a-102g can be further divided into one or more sectors. Various UTs 106a, 106b, 106c, 106d, 106e, 106f, 106g, 106h, 106i, 106j, 106k (alternatively, UTs 106a-106k) are dispersed throughout system 100. Each AT 106a-106k can communicate with one or more APs 104a-104g on a forward link (FL) and/or reverse link (RL) at a given moment, depending on whether an AT (106a-106k) is active or whether it is in soft handoff, for example. The wireless communication system 100 can provide service over a large geographic area; for example, macro cells 102a-102g can cover a few blocks of a neighborhood.

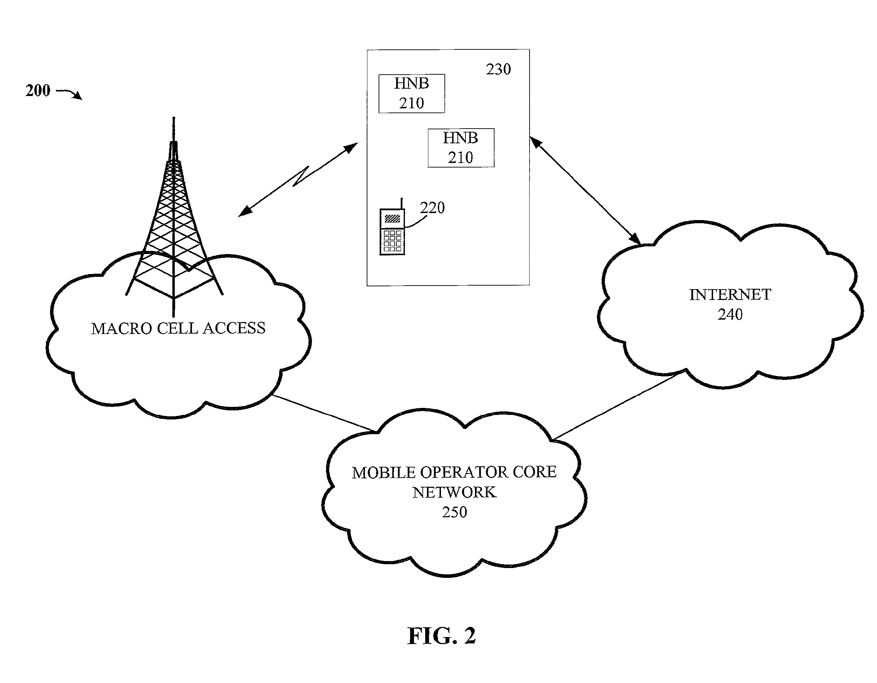

**Fig. 2** depicts an exemplary communication system 200 to enable deployment of access point BSs (*e.g*., HNBs) within a network environment. System 200 includes multiple access point BSs including HNBs 210, each of which are installed in corresponding small scale network environments. Examples of small scale network environments can include user residences, places of business, indoor/outdoor facilities 230, and so forth. The HNBs 210 can be configured to serve associated UTs 220 (*e.g*., included in a CSG associated with HNBs 210), or optionally alien or visitor UTs 220 (*e.g*., that are not configured for the CSG of the HNB 210). Each HNB 210 is further coupled to the Internet 240 and a mobile operator core network 250 *via* a DSL router (not shown), or, alternatively, a cable modem, broadband over power line connection, satellite Internet connection, or a like broadband Internet connection (not shown).

To implement wireless services *via* HNBs 210, an owner of the HNBs 210 subscribes to mobile service, such as 3G mobile services, offered through the mobile operator core network 250. Also, the UE 220 can be capable to operate in a macro cellular environment and/or in a residential small scale network environment, utilizing various techniques described herein. Thus, at least in some disclosed aspects, HNB 210 can be backward compatible with any suitable existing UE 220. Furthermore, in addition to the macro cell mobile network 250, UE 220 is served by a predetermined number of HNBs 210, specifically HNBs 210 that reside within a corresponding user residence(s), place(s) of business, or indoor/outdoor facilities 230, and cannot be in a soft handover state with the macro network 250. It should be appreciated that although aspects described herein employ 3GPP terminology, it is to be understood that the aspects can also be applied to 3GPP technology (Release 99 [Re199], Re15, Re16, Re17), as well as 3GPP2 technology (1xRTT, 1xEV-DO Re10, RevA, RevB) and other known and related technologies.

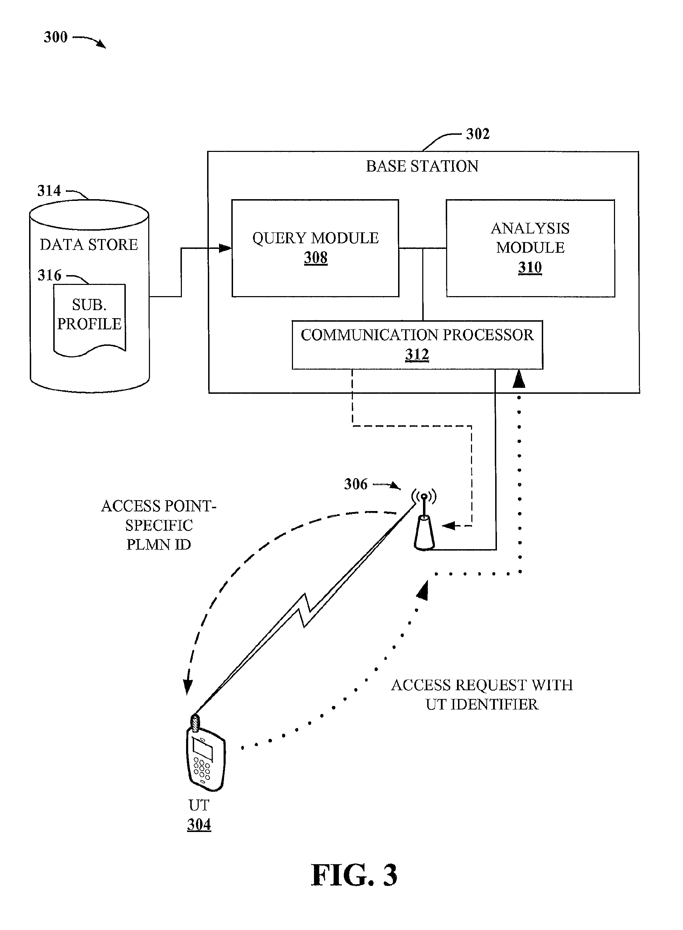

**Fig. 3** illustrates a block diagram of an example system 300 that can facilitate access to a mobile network that comprises different types or categories of access points. In some aspects, system 300 can establish GA macro BSs as default access points to a mobile network. Different types of access points, such as HNBs, WiFi access points, WiMAX access points and so on, which can also facilitate wireless communication with the mobile network, can be established as specialized access points. A distinct ID is reserved for each type of specialized access point to distinguish one type of access point from other types. If a UT 304 has a subscription pertaining to a specialized access point, an ID associated with a type of such access point can be provided to the UT 304. According to some aspects, the ID can be established as an equivalent of an ID associated with the default GA macro BSs. Thus, legacy UTs (304) that are not configured to identify specialized access point IDs can, at least in some circumstances, utilize a specialized access point as an equivalent of the default access point.

System 300 comprises a BS 302 that facilitates wireless access to a mobile network (not depicted) for remote terminal devices (*e.g*., UT 304). BS 302 can employ a transceiver 306 configured to transmit and receive wireless data with such terminal devices (304). To facilitate such communication, a communication processor 312 can obtain an access point type ID associated with BS 302. The access point type ID can be included in signals transmitted by transceiver 306. UTs 304 that receive such signals can determine the type of BS 302 from the ID, and determine whether to access the BS 302 based at least in part on the type of BS. Thus, for instance, if the type ID is a default type (*e.g*., a PLMN ID of a service operator) or a specialized type with which the UT 304 has an active subscription, or is otherwise configured and authorized to access, UT 304 can handoffto BS 302 and/or request network services from such BS 302. Otherwise, if the type ID is not recognized by the UT 304 or is associated with an unauthorized type of BS, UT 304 can refrain from signaling the BS 302 to preserve processing power and battery life.

In some aspects of the subject disclosure, system 300 can provide regional-based access to a mobile network. In such aspects, geographic regions (*e.g*., delineated by legal and/or topographical boundaries) or network regions (*e.g*., Registration Area Identifier, LAI, RAI) can be established. Access points contained within a particular region are considered part of that region, and are assigned an ID distinct to the region. In some aspects, a single set of regions can be assigned for all access points, regardless of access point type. In other aspects, multiple sets of regions (some of which can overlap) can be assigned to different types of access point networks. Thus, for instance, one set of regions and associated IDs can be established for HNBs, whereas a separate set of regions and the IDs are established for macro BSs. In addition to a network ID (*e.g*., an operator's PLMN ID) each access point can be assigned an ID in which the access point is located.

In some aspects of the subject disclosure, the ID can comprise Regional Subscription Data employed for regional restricted roaming within a visited PLMN ID. In such aspects, each region has distinct regional subscription data, distinguishing each such region from other regions. A subset of the regions can be selected as home or preferred regions/ registration areas for a subscriber. A profile for the subscriber, maintained by a network operator for instance, can comprise IDs (*e.g*., PLMN IDs) of home macro network BSs, visited macro network BSs, as well as IDs of specialized access points usable by the subscriber's terminal (304). Home/preferred regions for each of the specialized access points can be written to a Regional Subscription Data field associated with each specialized access point ID (*e.g*., PLMN IDs reserved for such types of access points). Thus, as an example, if UT 304 is configured and authorized to access macro BSs associated with a particular network operator as well as a set of HNBs, a subscriber profile (316) associated with UT 304 can contain a PLMN ID for the network operator, as well as a specialized PLMN ID reserved for HNBs. Furthermore, an ID(s) associated with any HNB home region(s) (*e.g*., in which a home HNB associated with UT 304 is located) can be written to the Regional Subscription Data field of the profile (316), providing efficient identification of such regions.

When a UT 304 requests access to a network, BS 302 can obtain an identifier (*e.g*., a mobile subscriber identifier [MSI], international mobile subscriber identifier [IMSI], network-specified identifier, or the like) associated with the UT 304. A query module 308 can employ the UT ID to obtain a subscriber profile 316 associated with the UT 304 from a network data store 314. An analysis module 310 can obtain access point ID and regional/Registration Area ID information from the profile 316. Based on such information, the analysis module 310 can determine whether the UT 304 is associated with any specialized access points, and if so, whether any home regions are specified. If BS 302 is within a home region identified by the profile 316, a specialized access point ID can be transmitted to the UT 304 by BS 302, to facilitate interfacing with the mobile network *via* such access points while UT 304 is within the home region. If BS 302 is not within any home regions identified by the profile 316, only macro network IDs are transmitted to the UT 304.

As described, regional access can facilitate more efficient mobility for UT 304. Specifically, where authorization to use a particular type ofBS (302) involves being within a home region, UT 304 can selectively interact with that type of BS only when in the home region. When outside of the home region, the particular type of BS (302) can be ignored, yielding reduced signaling overhead for the UT 304.

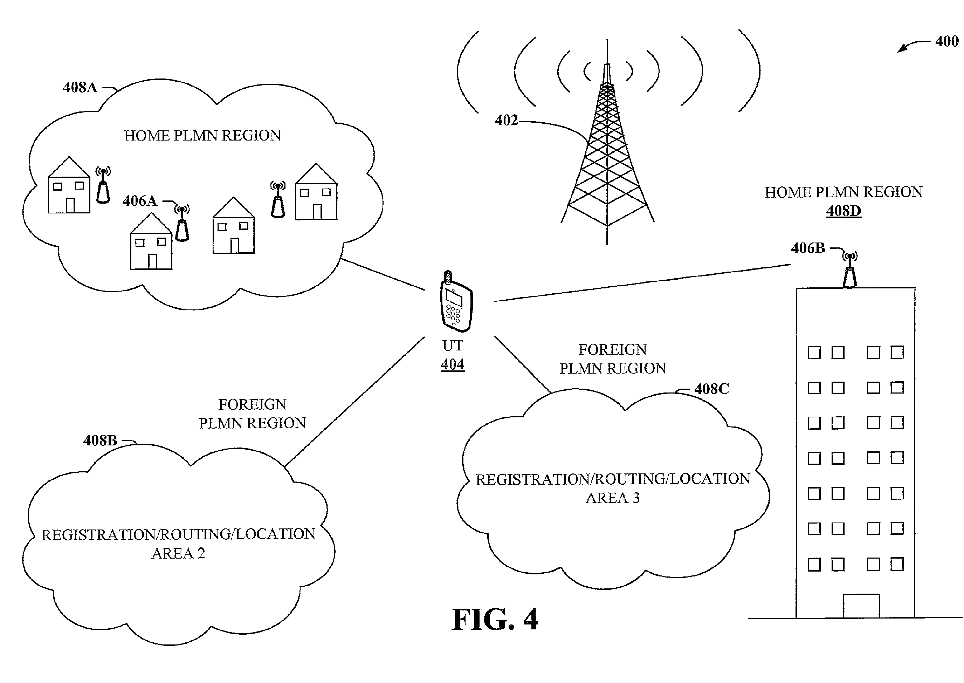

**Fig. 4** illustrates a block diagram of an example network environment 400. Network environment 400 comprises several network regions, 408A, 408B, 408C, 408D (408A-408D). The network regions can be defined by geographic area or network area, as described herein. Additionally, the network regions 408A-408D can include various mobile network access points coupled with a core mobile network (not depicted) to provide wireless communication services. Access points located within a particular region are deemed part of such region, and can be assigned an ID of the region. Furthermore, the access points are assigned an ID based at least in part on access point type (*e.g*., GA, RA, fractional resource re-use or full resource re-use, transmit power, cell size, or the like), as described herein.

As depicted, network environment 400 comprises at least four network regions 408A-408D that include specialized access points. The specialized access points can include any non-macro BS that can provide a wireless interface, directly or indirectly, to a mobile operator's network, as described herein. For simplicity, however, the below description of network environment 400 will refer to such access points as HNBs; however it should be appreciated that other such access points are contemplated, and functional description peculiar to an HNB provided below can be replaced with functional description suited to such other access points, as would be appreciated by one of skill in the art.

The depicted regions 408A-408D are labeled as a function of access relationship to a UT 404. Thus, the regions 408A-408D comprise a first home PLMN region 408A (having a home HNB 406A), a first and second foreign PLMN region 408B, 408C (having no home HNBs) and a second home PLMN region 408D (having home HNB 406B). The home HNBs 406A, 406B comprise a CSG listing UTs (404) that are authorized to utilize the home HNBs 406A, 406B (one such UT being UT 404). UTs not included within the CSG are provided only limited or no network access/communication services. Likewise, UTs included within the CSG are provided full network access/communication services.

As UT 404 travels throughout the network environment 400, communication services can be obtained from the macro network access points 402. However, the UT 404 can often obtain preferential services (*e.g*., increased bandwidth, increased data rates, higher quality of service, reduced rate plans, *etc*.) from a home HNB 406A, 406B. In addition, by utilizing the home HNBs 406A, 406B, macro network load can be reduced. Accordingly, it can be beneficial for UT 404 to obtain access from the home HNBs 406A, 406B when possible.

Under legacy network parameters, UT 404 can interface with a home HNB 406A, 406B in a substantially similar manner as a macro BS 402. Thus, the UT 404 can search for the strongest signal and camp on/request access from whichever BS (402, 406A, 406B) provides the strongest or best quality signal. When outside of the PLMN regions 408A-408D comprising specialized access points, the macro network can likely provide the best signal, and will typically be selected by the UT 404. However, if the UT 404 is proximate a region (408A-408D) comprising one or more HNBs (406A, 406B), the nearby HNBs can have much better signal characteristics than a distant macro BS 402. Thus, the UT 404 will be more likely to search for, camp on and request access from the HNBs. Since a deployment of HNBs can typically contain many more foreign HNBs (*e.g*., in which UT 404 is not included in a CSG) than home HNBs, UT 404 can be exposed to many access rejections in attempting to access the strongest nearby signal. Such a result can lead to significant processing overhead and reduction in battery life for UT 404.

To mitigate the foregoing problem, a specialized PLMN ID, for instance that is unique among operator PLMN IDs, can be reserved for HNB access points. When the specialized PLMN ID is transmitted to UT 404, the UT 404 will attempt to access or handoff to an access point broadcasting such PLMN ID. In addition, regions 408A-408D can be associated with distinct regional or Registration Area IDs. Upon subscribing to an HNB wireless subscription, a user profile ofUT 404 is associated with one or more PLMN regions in which a home HNB resides. In general, when UT 404 is within a foreign PLMN region (406B, 406C) the network 400 will not send the specialized PLMN ID to UT 404, and signals comprising such PLMN ID can be ignored, reducing overhead signaling to foreign HNBs that will not provide services to UT 404. However, when UT 404 is within the home PLMN region(s) 406A, 406D, the network 400 can transmit the specialized PLMN ID to the UT 404. Accordingly, within the home PLMN regions 406A, 406D, UT 404 can search for and request access from HNBs 406A, 406B, as well as the macro network 402.

According to some aspects, a manner in which regional access is provided can be based on capabilities of the UT 404. For instance, where subscriber profile information indicates that UT 404 is capable of employing access point IDs to distinguish between HNBs (406A, 406B) and the macro network 402, the specialized PLMN ID can be transmitted directly to the UT 404. Where the subscriber profile information does not indicate such capability, however, the specialized PLMN ID can be transmitted as an equivalent of an operator's PLMN ID. Thus, a legacy UT (404) can treat HNBs as macro BSs (402), and attempt to access a network by either an HNB or macro BS (402) when in the home region.

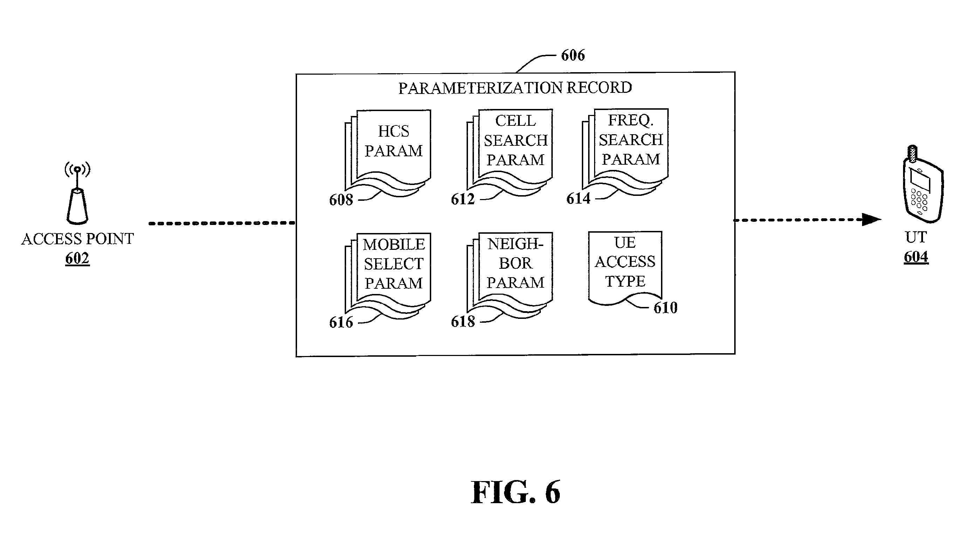

According to further aspects of the subject disclosure, the network 400 can further provide parameters configured to increase a likelihood that UT 404 will find and access HNBs over the macro network, or *vice versa.* Thus, when UT 404 is within a home PLMN region 408A, 408D, parameters favoring HNBs can be provided. On the other hand, where UT 404 is within a foreign PLMN region (408B, 408C) or not within a region containing specialized access points, parameters favoring macro BSs (402) can be provided. The parameters can be configured to reduce average time required to locate a preferred access point, increase likelihood of camping on/requesting services from the preferred access point and/or reduce such likelihoods with respect to non-preferred access points (*e.g*., *see* **Fig. 6****,** *infra*).

In at least some aspects of the subject disclosure, UT 404 can be configured to improve detection of the home HNBs 406A, 406B within the home PLMN regions 408A, 408D, in addition to the parameterization described herein. In one example, UT 404 can record an ID of HNBs and/or position location of such HNBs (*e.g*., based on GPS location, location of nearest macro BS, or the like) that reject network access to the UT 404. The IDs/positions can be included in a restricted list, or blacklist. By 'remembering' which HNBs are restricted, the UT 404 can avoid signaling to HNB IDs on the restricted list, reducing signaling and saving battery power. In addition to the foregoing, UT 404 can store an HNB ID and/or position location of home HNBs 406A, 406B that permit access to the UT 404. The home HNB IDs can be included in a preferred list, and signals including the home HNB IDs can be given priority over other signals. Thus, when receiving a signal comprising the home HNB ID or when in a position substantially matching the position of the home HNB, UT 404 can camp on or request access from the home HNBs 406A, 406B and ignore signals of other BSs (*e.g*., so long as the signal from the home HNB is at last above a low relative threshold, as described herein).

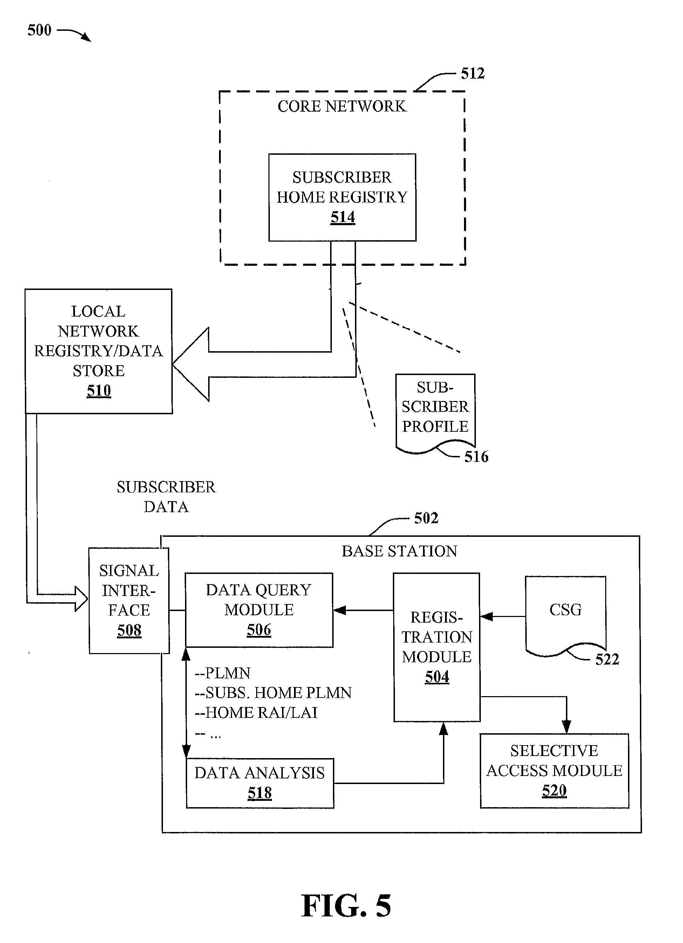

**Fig. 5** illustrates a block diagram of an example system 500 that provides regional access to a mobile network. System 500 can include various types of access points and base stations that wirelessly couple remote terminal devices to a core mobile network (*e.g*., 3GPP core network). Regional access can be based on one or more home regions of the terminal devices, and as a function of access capabilities of such devices. Where RA is supported, a home region(s) of the device can be obtained and compared with a region in which a serving access point is located. If the access point region and home region match, the device can be provided with information facilitating recognition of RA access points. Additionally, a set of parameters can be provided to the device that weights a probability of identifying or camping on a particular type of access point. The set of parameters can increase a likelihood of discovering a preferred or home access point, as well as provide load balancing among the various types of access points. Accordingly, system 500 can provide increased efficiency for mobile communications.

As depicted, system 500 can comprise one or more BSs 502. BS 502 can comprise a registration module 504 that obtains an access request from a remote UT (not depicted). Information identifying the UT can be extracted from the access request, which is provided to a data query module 506. The data query module 506 can employ the identifying information to obtain a subscriber profile 516 from components of a core network 512. For instance, the data query module 506 can employ a signaling interface 508 utilizing inter-component protocols (*e.g*., signaling system 7 [SS7], mobile application part [MAP]) to communicate with a local network registry and/or data store 510 (*e.g*., a mobile switching center [MSC]/visitor location registry [VLR], Serving General packet radio service Support Node [SGSN], or the like). The local registry 510 can request subscriber data (516) associated with the information identifying the UT from a home subscriber registry 514 (*e.g*., HLR). The subscriber profile 516 is provided to the local registry 510 utilizing inter-network communication (*e.g*., a MAP interface), and forwarded to the data query module 506.

Once the BS 502 receives the subscriber profile 516, data can be extracted there from to implement the regional network access. A data analysis module 518 can parse the subscriber profile 516 to obtain access point IDs, regional/network ID information and subscription status information, as well as access capabilities of the UT (*e.g*., whether the UT is configured and/or authorized for HNB access, WiFi access, WiMAX access, macro network access, and so on). As one example, a PLMN ID associated with a service provider's network as well as a specialized PLMN ID associated with HNBs can be extracted from the profile 516, if the requesting UT is configured for HNB access. In addition, a home region ID associated with the specialized PLMN ID can also be extracted. The information is provided to registration module 504 to determine whether network access is to be provided to the UT in response to the request. If BS 502 is an RA BS, registration module 504 can further check a CSG 522 to determine whether the requesting UT is permitted to utilize BS 502.

In some aspects of the subject disclosure, BS 502 can include a selective access module 520 that provides access point ID information to a requesting UT based on a region in which BS 502 resides, and based on capabilities of the requesting UT. The selective access module 520 can, for instance, provide access point type IDs to the UT that are included in the subscribe profile 516. Optionally, one or more such access point type IDs can be omitted depending on whether the BS 502 is within a home region of the UT (indicated in the profile 516), as described herein. Where the UT is within a region comprising one or more specialized access points, selective access module 520 can further provide the UT with a set of parameters configured to increase a probability that the UT will search for, access and/or handoff to an access point associated with a specialized access point ID. Alternatively, where the BS 502 is not in a region associated with a specialized access point type, a different set of parameters can be provided to the UT, which increases a probability that the UT will search for, access and/or handoff to GA macro BSs. According to at least some aspects, the set of parameters provided to the UT can be based at least in part on current network loading. Thus, for instance, where specialized access points are heavily loaded, the parameters increasing probability of connecting to macro BSs can be sent to the UT. Likewise, where macro BSs are heavily loaded, and the UT is configured and/or authorized for one or more specialized access points (*e.g*., WiMAX), a set of parameters configured to increase the probability of connecting to the specialized access points can be provided instead. Accordingly, BS 502 can be helpful in balancing load among various access points in a network comprising disparate types of such access points.

**Fig. 6** illustrates a block diagram of an example parameterization record 606 transmitted by a network BS 602 to a UT 604. The parameterization record 606 can be broadcast by BS 602 to UTs 604 within a sector of a wireless communication network served by the BS 602, or unicast specifically to UT 604 or a group of such UTs (604). According to some aspects of the subject disclosure, the parameterization record 606 can provide threshold parameters that weight a likelihood of UT 604 searching for, acquiring and/or handing off to a particular type of network access point (602). Accordingly, the parameterization record 606 can be utilized in a network comprising disparate access type BSs (602), such as RA BSs and GA macro BSs, to direct UTs (604) to one or another type of BS. Selection of a preferred and/or non-preferred BS (602) can be based on sector load, UT capabilities, inter-sector interference, and so forth.

The parameterization record 606 can comprise an HCS parameter 608 that establishes relative priority of BS 602 and neighboring BSs (not depicted) in a wireless access network. The HCS parameter 608 can be coupled with a cell search parameter 612 to modify default search parameters of the UT 604. Thus, for instance, the HCS parameter 608 can provide a relative priority (*e.g*., comprising quantitative priority such as a numerical scale, or qualitative priority such as high, medium, low or other relative indicators) for BSs (602) of different access type, different re-use type (*e.g.,* full re-use, fractional re-use, *etc*.), different transmit power (*e.g.,* 50 watt macro cell, 25 watt micro cell, 5 watt pico cell, 1 watt Femto cell, or some other suitable combination of network cell size and transmit power), different access technology (*e.g*., wireless fidelity [WiFi], worldwide interoperability for microwave access [WiMAX], licensed cellular radio frequency), or the like, or a combination thereof. The cell search parameter 612 can establish one or more minimum thresholds for various types of BSs (602), below which threshold(s) the UT 604 can search for a first set of BS types and above which threshold(s) UT 604 can search for a second set of BS types. In some aspects, the set(s) of BS types can be established by the HCS priority parameter 608.

As one example of the foregoing, the HCS parameter 608 establishes three priorities, low priority for GA BSs of any suitable type, medium priority for fractional re-use BSs (*e.g*., micro or pico cells that employ only a fraction of a channel's s bandwidth, which can be more efficient than full re-use BSs that employ all of the channel's bandwidth), and high priority for HNBs. The cell search parameter 612 can then establish a high minimum threshold for low priority BSs (*e.g*., such as GA macro cell BSs), a medium minimum threshold for medium priority BSs, and a low minimum threshold for high priority BSs. In such case, if UT 604 is served or camping on an HNB, so long as the signal of the HNB meets the low minimum threshold, the UT 604 will not search for other BSs, or optionally will search only for other high priority BSs (*e.g*., other HNBs). If, however, the UT 604 is served by a medium priority fractional re-use BS, so long as the signal of the fractional re-use BS meets the medium minimum threshold, UT 604 will search only for high priority BSs, or optionally for other medium priority BSs having better signal than the serving fractional re-use BS. If the serving BS is a low priority BS, the UT 604 will search for high or medium priority BSs if the signal strength meets the high minimum threshold, and any other suitable BS if the signal strength does not meet the high minimum threshold. Specific examples of the HCS parameter 608 and cell search parameter 612 in a WCDMA network are the HCS_PRIO parameter and S_{searchHCS} parameters, respectively. It should be appreciated, however, that the subject disclosure is not limited to WCDMA networks and parameters. Rather, other suitable wireless network systems having analogous BS priority and/or search parameters, such as 3GPP LTE, UMB, WiMAX, UMTS, and so on, are contemplated as part of the subject disclosure.

Parameterization record 606 can also include a UE access type 610 parameter that includes some capabilities of the UT 604. The capabilities can be obtained from the UT 604, or from a network operator's HLR, or other suitable network data source. Additionally, the UE access type 610 can be utilized as a selective parameterization flag, selecting one of multiple sets of parameters 608, 612, 614, 616, 618 configured for various UT capabilities and contained in the parameterization record 606. Thus, to continue the foregoing example, if the UE access type for UT 604 is GA macro network only, a different set of HCS parameters 608 and cell search parameters 612 can be provided to and/or selected by the UT 604, instead of those listed in the example above. For instance, the HCS parameter 608 can give high priority to GA macro BSs and low priority to RA BSs. In addition, the cell search parameter 612 can establish a high minimum threshold for the RA BSs, increasing likelihood that UT 604 ignores such BSs or searches for other BSs when served by an RA BS, and a low minimum threshold for GA BSs. It should be appreciated that other suitable priority and search parameter configurations can exist, which are correlated to different UT capabilities. For instance, a different set of parameters can be established for multimode WiFi/Cellular UTs (604), establishing priority for WiFi access points, cellular access points, or both, compared with other access point types (*e.g*., WiMAX).

In addition to the foregoing parameters, parameterization record 606 can further comprise a frequency search parameter 614, mobile selection parameter 616, and a neighbor cell parameter 618. Examples of the foregoing parameters in the WCDMA context can include an S_{INTERSEARCH} parameter (*e.g*., for searching between different available frequency channels of a network), S_{INTRASEARCH} parameter (*e.g*., for searching within a frequency channel) and Qhyst1_{S} and Qoffset1_{S,N,} (*e.g*., for determining whether to handoff to another BS or add another BS to an active handover set). In similar fashion as described above, the frequency search parameter 614, mobile cell selection parameter 616 and neighbor cell selection parameter 618 can be established with varying minimum thresholds per HCS priority type. Additionally, sets of preferred and non-preferred parameters 614, 616, 618 can be provided as a function ofUE access type 610. Thus, for instance, ifUT 604 is RA-capable, the parameters 614, 616, 618 can establish low minimum thresholds for RA BSs, such as HNBs, and medium and/or high minimum thresholds for other types of BSs. In such case, the UT 604 is more likely to search within and between frequency channels and handoff to RA BSs, and more likely to remain camped on/served by RA BSs.

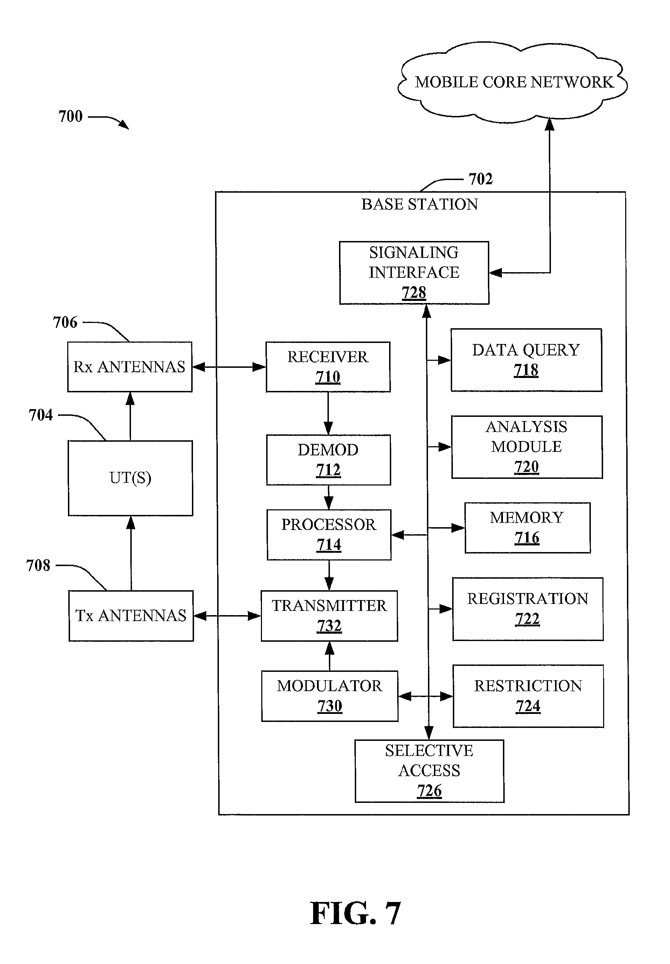

**Fig. 7** depicts a block diagram of an example system 700 comprising a BS 702 and one or more UTs 704 (*e.g*., mobile devices) according to aspects of the subject disclosure. BS 702 can be configured to provide selective access to disparate types of mobile network access points, as described herein. For UTs 704 configured to identify and distinguish between such types of access points, an ID(s) of suitable types of access points can be transmitted to the UTs 704 to facilitate acceptance of signals initiated by such access points. Where the UTs 704 are not configured to identify and/or distinguish between different types of access points, an access point ID can be established as an equivalent to a macro network ID, thereby causing the UT 704 to accept signals comprising the access point ID as if they are macro network BSs. In other aspects of the disclosure, parameterization for weighting search and/or access priority as a function of access point type can be sent to the UTs 704, as described herein. Such parameterization can increase a likelihood that UTs 704 will discover/access one type of access point, or to decrease a likelihood that UTs 704 will discover/access a second type of access point. In some aspects, the parameters provided can be based on capabilities of the UTs 704.

BS 702 (*e.g.,* access point, ...) can comprise a receiver 710 that receives signal(s), and over-the-air (OTA) messages from one or more UTs 704 through one or more receive antennas 706, and a transmitter 732 that transmits coded/modulated OTA signals and messages provided by modulator 730 to the one or more UTs 704 through a transmit antenna(s) 708. Receiver 710 can receive information from receive antennas 706 and can further comprise a signal recipient (not shown) that receives uplink data transmitted by UT(s) 704. Additionally, receiver 710 is operatively associated with a demodulator 712 that demodulates received information. Demodulated symbols are analyzed by a processor 714. Processor 714 is coupled to a memory 716 that stores information related to functions provided by base station 702. In one instance, stored information can comprise rules for obtaining various access point IDs and providing such IDs to UTs 704 and/or establishing one or more such IDs as an equivalent to a macro network ID. Additionally, stored information can comprise sets of parameters configured to establish preferred and non-preferred BSs (702). Particularly, the stored information can comprise parameters establishing an HCS prioritizing RA BSs relative to GA BSs, and employing RA-capabilities of UTs 704 to set the relative priorities, as described herein.

Additionally, processor 714 can be coupled to a registration module 722 that obtains an access request from a UT 704. The registration module 722 can obtain data identifying the requesting UT (704) and provide such information to a data query module 718. Data query module employs the identifying data to obtain subscriber profile information from a mobile core network *via* a signaling interface 728. Once obtained, an analysis module 720 can extract UT capabilities, suitable access point type IDs, regional access ID information, and like information as described herein. Based on such information, and optionally based on whether the requesting UT (704) is included in a CSG associated with BS 702, registration module 722 can determine whether to provide access to the requesting UT (704).

In addition to the foregoing, BS 702 can include a selective access module 726. Selective access module 726 can establish and transmit a set ofUT parameters that increases a probability that the UT 704 will obtain and access an RA BS, or decreases a probability that the UT 704 will access a GA BS in favor of the RA BS. Additionally, BS 702 can comprise a restriction module 724. Restriction module 724 can facilitate reduced overhead signaling for UTs 704 in a RA BS environment. For instance, if registration module 722 denies an access request from a requesting UT (704) (*e.g*., because BS 702 is an RA BS and the requesting UT is not included in a CSG associated with the BS 702), such UT (704) might immediately try to connect with other nearby BSs. In a dense deployment of RA BSs, such a result can lead to multiple requests that are ultimately denied, significantly draining battery power of the requesting UT (704). Accordingly, restriction module 724 can submit a delay parameter to the UT if registration module 722 denies the request. The delay parameter requires the UT to ignore access points having a common access point ID as BS 702 (*e.g.,* a common PLMN ID, or common reserved PLMN ID) for a delay period. Optionally, selective access module 726 can also submit a parameterization set increasing a probability that the requesting UT (704) will search for access points having a different access point ID as BS 702. As a result, the requesting UT is more likely to access non RA BSs, significantly reducing wasted overhead signaling to foreign RA BSs.

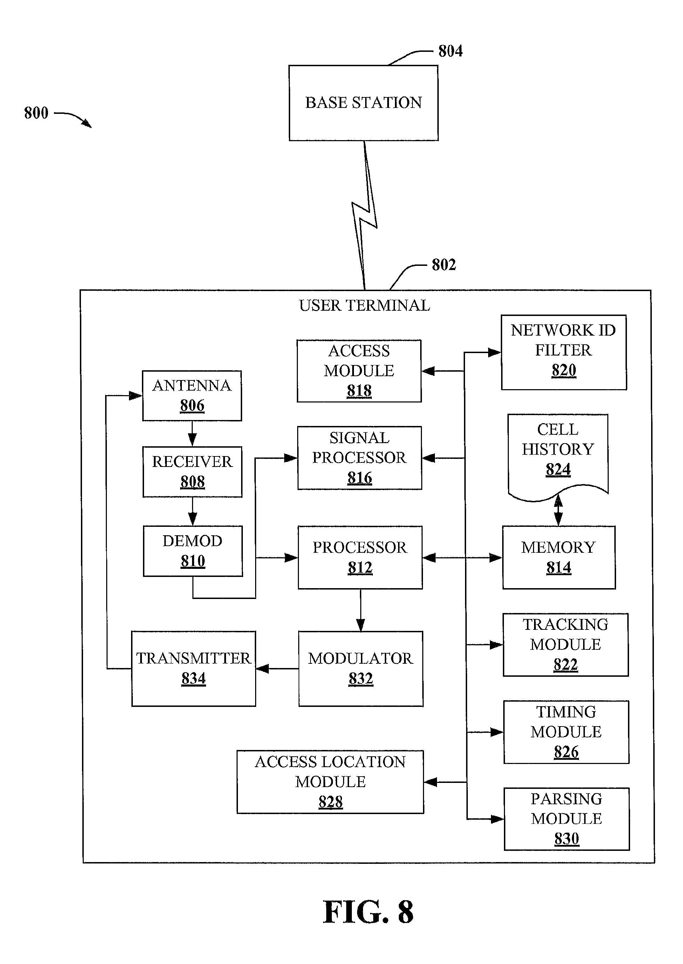

**Fig. 8** illustrates a block diagram of an example system 800 comprising a UT (*e.g*., mobile device) 802 that can be configured to interface with a BS 804. UT 802 can be configured to wirelessly couple with one or more such BSs 804 (*e.g*., access point) of a wireless network. Thus, for instance, UT 802 can receive OTA signals from the BS 804 on a FL channel and respond with OTA signals and messages on a RL channel, as known in the art. Furthermore, UT 802 can obtain access point IDs from the BS 804, which identify types of access points that the UT 802 is configured and/or authorized to interface to. In some aspects, the access point IDs can be established as equivalents to an operator's macro network ID, which the UT 802 is configured to employ in wireless communications. Alternatively, or in addition, UT 802 can obtain BS search and access parameterization transmitted by the BS 804. The parameterization can be based on a type (*e.g*., transmit power, access type, re-use type) of BS 804 and neighboring BSs (not depicted), and optionally based on access capabilities of the UT 802, as described herein.

UT 802 includes at least one antenna 806 (*e.g*., a transmission receiver or group of such receivers comprising an input interface) that receives a signal and receiver(s) 808, which performs typical actions (*e.g*., filters, amplifies, down-converts, *etc*.) on the received signal. According to at least some aspects, a processor(s) 812 can selectively analyze portions of signals received from demodulator 810 and obtain synchronization and/or control information pertinent to a selected base station (804) or type of base station. In general, antenna 806 and transmitter 834, which wirelessly sends modulated symbols provided by modulator 832, (collectively referred to as a transceiver) can be configured to facilitate wireless data exchange with base station(s) 804.

Antenna 806 and receiver(s) 808 can also be coupled with a demodulator 810 that can demodulate received symbols and provide them to processor(s) 812 for evaluation. It should be appreciated that processor(s) 812 can control and/or reference one or more components (806, 808, 810, 814, 816, 818, 820, 822, 824, 826, 828) of the UT 802. Further, processor(s) 812 can execute one or more modules, applications, engines, or the like (816, 818, 822, 824, 826, 828) that comprise information or controls pertinent to executing functions of the UT 802. For instance, such functions can include scanning received wireless signals for a PLMN ID of an operator associated with BS 804, a distinguishing ID of BS 804, distinct IDs of specialized network access points (*e.g.,* HNBs, WiFi access points, WiMAX access points, *etc.*), employ search and/or access parameterization to establish and identify preferred BS types over non-preferred BS types, or like operations, as described herein.

UT 802 can additionally include memory 814 that is operatively coupled to processor(s) 812. Memory 814 can store data to be transmitted, received, and the like, and instructions (820) suitable to conduct wireless communication with a remote device (804). Further, memory 814 can store the modules, applications, engines, *etc.* (816, 818, 822, 824, 826, 828) executed by processor(s) 812, above.

In addition to the foregoing, processor(s) 812 and memory 814 can be coupled to an access module 818 configured to generate and submit a network access request to BS 804. Additionally, UT 802 can comprise a signal processor 816 that obtains an ID associated with select access points of a wireless network. Such an ID can distinguish the select access points as a function of type, including access type, re-use type, transmit power, cell size, or the like, or a combination thereof. The ID can be provided to UT 802 subject to approval of an access request submitted by access module 818. In such case, the ID can be submitted by access module 818 in subsequent access requests to BSs (804) that transmit the ID in pilot and/or acquisition data utilized for accessing such BSs (804). In at least one aspect, access module 818 can request a parsing module 830 to scan a received wireless signal for data identifying whether a cell ID transmitted by BS 804 (*e.g*., a tracking area [TA]) is an RA or GA cell ID. If the cell ID is an RA ID, access module 818 can condition submitting an access request to BS 804 based on whether the cell ID is associated with a home RA BS, such as a home HNB, or whether a delay time restricting access to RA BSs imposed by timing module 826 is in effect (see below).

Further to the above, UT 802 can comprise a filtering module 820 that references an access point ID of BS 804 against a set of home region IDs stored in memory 814. The home region IDs can identify one or more geographic or network regions that provide subscription-based services or preferred access services to UT 802. If a suitable home region ID is identified, filtering module 820 can establish a BS (804) transmitting such access point ID as a preferred or high priority BS. Access module 818 can then raise a threshold below which an access request is submitted to such a BS. In some aspects, the filtering module 820 can establish the access point ID as an equivalent of an operator's PLMN ID, or like identifier associated with the operator. The equivalent ID can enable access module 818 to treat access points utilizing such ID in substantially similar manner as macro BSs managed by the operator.

In one or more other aspects, UT 802 can comprise a connectivity tracking module 822 that records access history to BSs (804). Thus, for instance, the connectivity tracking module 822 can record a cell ID or position location data of an access point that approves an access request. Position location data and/or access location data can be provided by a location tracking module 828, which can reference a registration area or access area ID in which the UT 802 is located, or can include a geographic position location device (*e.g*., GPS), or other suitable device for determination position location. The access location or position location can be correlated to a home access point, which can be established as a preferred access point or high priority access point. Alternatively, or in addition, connectivity tracking module 822 can record a cell ID or access location data of an access point that denies the access request. In such case, the cell ID/access location can be correlated with a foreign access point, and placed on a blacklist. Blacklisted cell IDs/access locations can be ignored by access module 818 when determining whether to initiate an access request. In addition to the foregoing, if an access request is denied, a timing module 826 can impose a delay time on subsequent signaling to access points sharing a common access point ID as a BS that denies access to UT 802. The delay time can be helpful in avoiding redundant or wasted signaling to foreign HNBs, for instance.

The aforementioned systems have been described with respect to interaction between several components, modules and/or communication interfaces. It should be appreciated that such systems and components/modules/interfaces can include those components or sub-components specified therein, some of the specified components or sub-components, and/or additional components. For example, a system could include HNBs 210, Internet 240, core network 502, and UT 802 or a different combination of these and other components. Sub-components could also be implemented as components communicatively coupled to other components rather than included within parent components. Additionally, it should be noted that one or more components could be combined into a single component providing aggregate functionality. For instance, data query module 506 can include data analysis module 518, or *vice* versa, to facilitate querying subscriber profile information and analyzing the information by way of a single component. The components can also interact with one or more other components not specifically described herein but known by those of skill in the art.

Furthermore, as will be appreciated, various portions of the disclosed systems above and methods below may include or consist of artificial intelligence or knowledge or rule based components, sub-components, processes, means, methodologies, or mechanisms (*e.g*., support vector machines, neural networks, expert systems, Bayesian belief networks, fuzzy logic, data fusion engines, classifiers...). Such components, *inter alia*, and in addition to that already described herein, can automate certain mechanisms or processes performed thereby to make portions of the systems and methods more adaptive as well as efficient and intelligent.

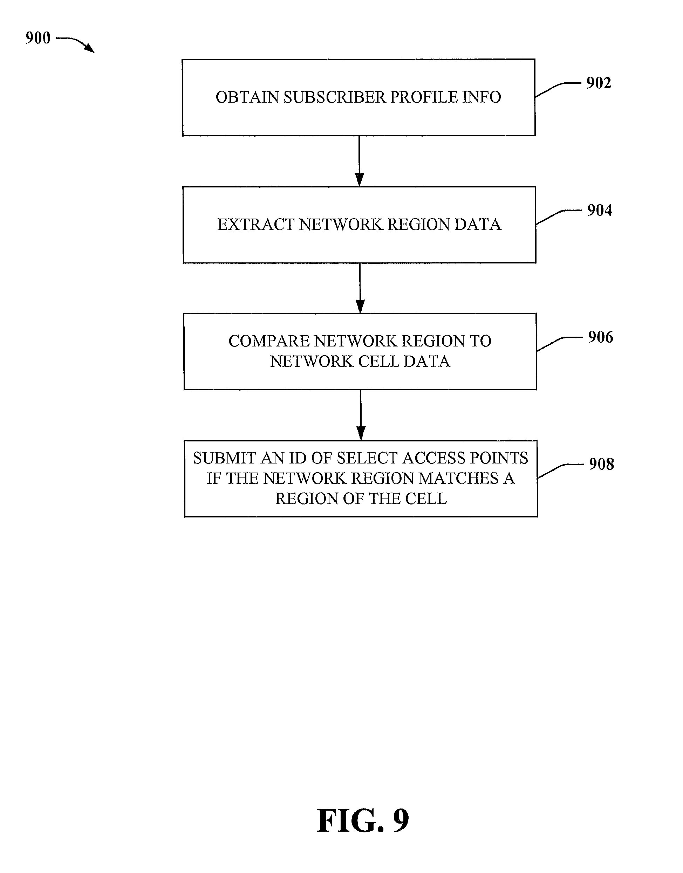

In view of the exemplary systems described *supra*, methodologies that may be implemented in accordance with the disclosed subject matter will be better appreciated with reference to the flow charts of FIGs. 9-12. While for purposes of simplicity of explanation, the methodologies are shown and described as a series of blocks, it is to be understood and appreciated that the claimed subject matter is not limited by the order of the blocks, as some blocks may occur in different orders and/or concurrently with other blocks from what is depicted and described herein. Moreover, not all illustrated blocks may be required to implement the methodologies described hereinafter. Additionally, it should be further appreciated that the methodologies disclosed hereinafter and throughout this specification are capable of being stored on an article of manufacture to facilitate transporting and transferring such methodologies to computers. The term article of manufacture, as used, is intended to encompass a computer program accessible from any computer-readable device, device in conjunction with a carrier, or storage medium.

**Fig. 9** illustrates a flowchart of an example methodology 900 for providing regional access to select categories of BSs according to some aspects of the subject disclosure. At 902, method 900 can obtain subscriber profile information pertaining to a UT. The subscriber profile information can be obtained from a network component maintained by a network operator associated with the UT (*e.g*., providing wireless services for the UT). Additionally, the profile information can include access capabilities of the UT (*e.g*., whether the UT is configured/authorized to access RA BSs, or configured to access specialized access points, such as WiFi, HNB, WiMAX, or other such access points as described herein), a PLMN ID of the network operator associated with the UT, access point IDs associated with the specialized access points, Registration Area ID information, home cell IDs, subscription status, and so on.

At 904, method 900 can extract data representing a network region from the profile information. As one example, the network region can comprise Regional Subscription Data, such as a Regional Zone Code supporting area restricted roaming. In other examples, the network region can comprise a Registration Area Identifier, TAI, LAI or RAI of a network. In still other examples, the network region can be based on any suitable identifier (*e.g*., number) assigned to distinct geographic and/or political boundaries (*e.g*., municipality, township, housing distinct, county, state, province, *etc*.). At 906, method 900 can compare the network region to data associated with a cell of a wireless network, such as a cell serving the UT, or a neighboring cell, or the like. At 908, method 900 can submit an ID associated with selected access points of a wireless network to the UT if the network region matches a network region of the cell. In some aspects, the selected access points can be specialized access points (*e.g*., HNBs) located within the network region, thereby enabling communication with such access points if the UT is within the network region. By submitting the access point ID when the UT is within the network region, the UT can infer that such selected access points, or a preferred access point in some instances, can be found while in the region.

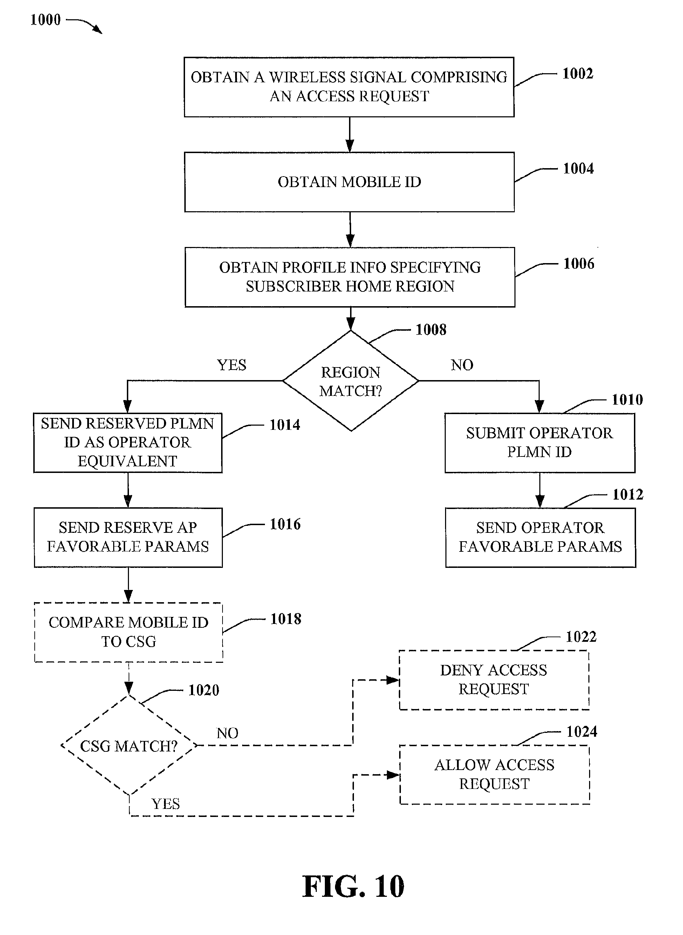

**Fig. 10** depicts a flowchart of an example methodology 1000 for facilitating reduced signaling for user terminals among dense deployments of disparate categories of BSs. As described below, method 1000 can provide improved mobile efficiency, particularly where such terminals are configured or authorized to access only a subset of available BSs. At 1002, method 1000 can obtain a wireless signal comprising a request to access a mobile network, or to obtain voice or data services from a network. At 1004, method 1000 can obtain an ID of a requesting UT from the access request. At 1006, method 1000 can obtain subscriber profile information specifying one or more home regions associated with the requesting UT. At 1008, method 1000 can determine whether a cell receiving the request matches a home region(s) specified in the subscriber profile information. If the cell matches the home region(s), method 1000 can proceed to 1014. Otherwise, method 1000 proceeds to 1010.

At 1010, method 1000 can submit an operator PLMN ID to the requesting UT. The PLMN ID facilitates access to macro network BSs that provide access to the operator's network. At 1012, method 1000 can send operator favorable parameters to the requesting UT. Such parameters can increase a likelihood that the UT searches for, accesses and/or hands off to the macro network BSs, or reduce a likelihood that the UT searches for, accesses and/or hands off to BSs other than the macro network BSs. Accordingly, when the UT is outside of an associated home region, method 1000 can facilitate directing the UT to a macro network, mitigating or eliminating signaling to non-macro BSs.

At 1014, method 1000 can send a reserved PLMN ID as an equivalent to an operator's PLMN ID. The reserved PLMN ID can be associated with select access points contained within the home region(s), which the UT is authorized and configured to utilize. By establishing the reserved PLMN ID as an equivalent of the operator's PLMN ID, the select access points can be treated substantially similar to macro BSs maintained by the operator. Accordingly, even where the UT is unable to specifically distinguish the select access points from the macro BSs, method 1000 can facilitate access to such select access points.

At 1016, method 1000 can send parameters to the UT that are favorable to the selected access points associated with the reserved PLMN ID. Such parameters can increase a likelihood that the UT searches for, accesses and/or hands off to access points associated with the reserved PLMN ID, or reduces a likelihood that the UT searches for, accesses and/or hands off to access points not associated with the reserved PLMN ID. As a result, the parameters can reduce terminal load on the macro network, and/or enable the UT to more efficiently locate a home or preferred access point associated with the reserved PLMN ID.

Method 1000 can optionally proceed to references numbers 1018 through 1024 (*e.g*., where a cell receiving an access request from the UT is an RA BS). At 1018, method 1000 can compare a mobile ID of the UT to a CSG associated with a receiving cell. At 1020, a determination is made as to whether the mobile ID matches an ID included in the CSG. If a match is found, method 1000 proceeds to 1024 where access to the cell is allowed. Otherwise, if no match is found, method 1000 can proceed to 1022 where access to the cell is denied. It should be appreciated that, although access might be denied by method 1000, an increased likelihood of the UT identifying a home RA BS can be provided. Specifically, by sending the reserved PLMN ID and network parameters favorable to RA BSs at reference numbers 1014 and 1016, respectively, the UT can be more likely to signal RA BSs over other types of BSs, potentially reducing a time required to locate the home RA BS. Accordingly, method 1000 can result in more efficient mobile access and reduced signaling overhead in many circumstances.

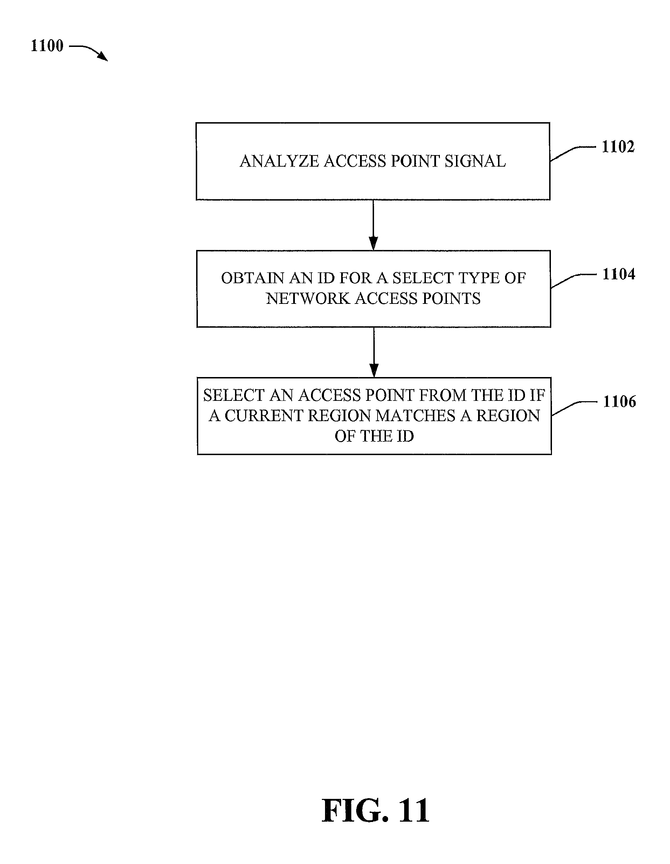

**Fig. 11** illustrates a flowchart of an example methodology 1100 for improving network access *via* preferred network access points. At 1102, method 1100 can signal an access point of a wireless network. In some aspects, the signaling can comprise a network access request to the access point. Furthermore, the access request can include an ID of a requesting device according to additional aspects. At 1104, method 1100 can obtain an ID associated with select access points of the wireless network. Such ID can be utilized to distinguish the select access points from other network access points as a function type (*e.g*., access type, re-use type, transmit power, cell size, *etc*.). Additionally, according to one or more particular aspects, the ID can be provided by a cell receiving the network access request subject to approval of such request.

At 1106, method 1100 can employ the ID to facilitate accessing the wireless network *via* at least one of the select access points. In some aspects, the ID can be utilized to distinguish one of the select access points from other types of access points. A decision of whether to pursue utilizing the select access points to couple to the wireless network can be based at least in part on such distinction. Further, employing the ID to filter potential access points can increase a probability of finding a preferred access point. In other aspects, employing the ID to filter potential access points can lead to improved load balancing among disparate types of access points. Accordingly, improved mobile efficiency can result in a wireless network environment comprising disparate types of network access points, as described herein.

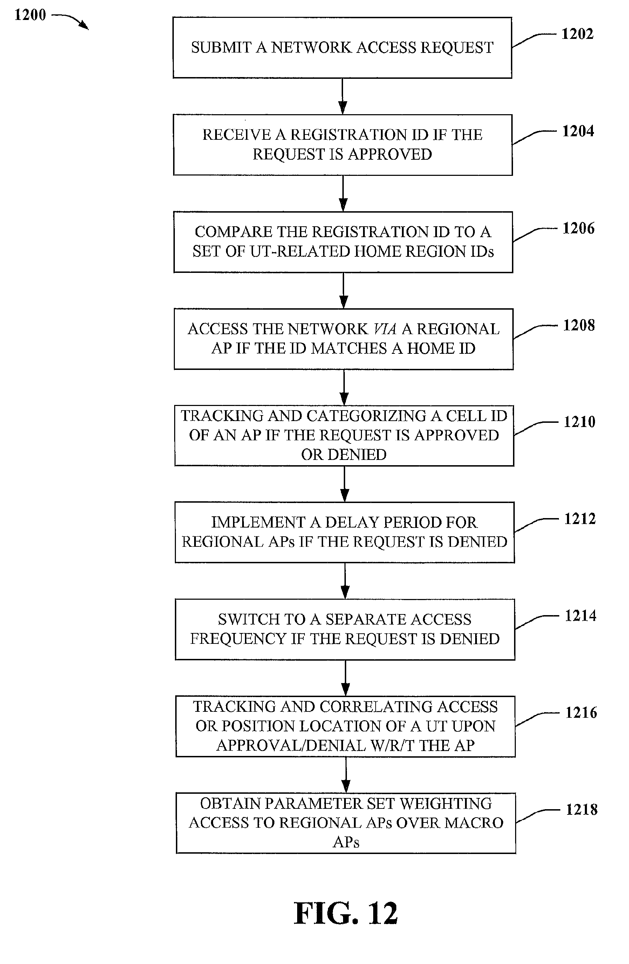

**Fig. 12** depicts a flowchart of a sample methodology 1200 for facilitating reduced signaling overhead in dense access point deployments according to particular aspects of the subject disclosure. At 1202, method 1200 can signal a network access point (*e.g*., where such signal comprises a network access request). At 1204, method 1200 can receive a regional/network ID in response to the signal. The regional/network ID can optionally be received subject to approval of a network access request. At 1206, method 1200 can compare the regional/network ID to a set of UT-related home region IDs. At 1208, method 1200 can access the wireless network *via* a specialized access point (*e.g*., HNB, WiFi, WiMAX, *etc*.) associated with the regional/network ID if the regional/network ID matches a home region ID. At 1210, method 1200 can track and categorize a cell ID of a specialized access point that approves of or denies access to the network. In some aspects, such tracking can be conditioned on the access point being an RA BS. At 1212, method 1200 can implement a delay period for specialized access points if an access request is denied. At 1214, method 1200 can switch to an access frequency employed at least in part by non-RA access points if the access request was denied. At 1216, method 1200 can track position location of a requesting device (*e.g*., UT) upon approval or denial of an access request. The position location can be correlated to an approving or restricting specialized access point based on whether the request is approved or denied, respectively. At 1218, method 1200 can obtain a parameter set that weights a likelihood of accessing or handing off to specialized access points associated with the regional/network ID as compared with macro BSs located within the region. Thus, for instance, if the access request is denied, the parameters can increase likelihood of accessing/handing off to macro BSs. Otherwise, where the access request is successful, the parameters can increase likelihood of accessing/handing off to specialized access points associated with the regional/network ID.

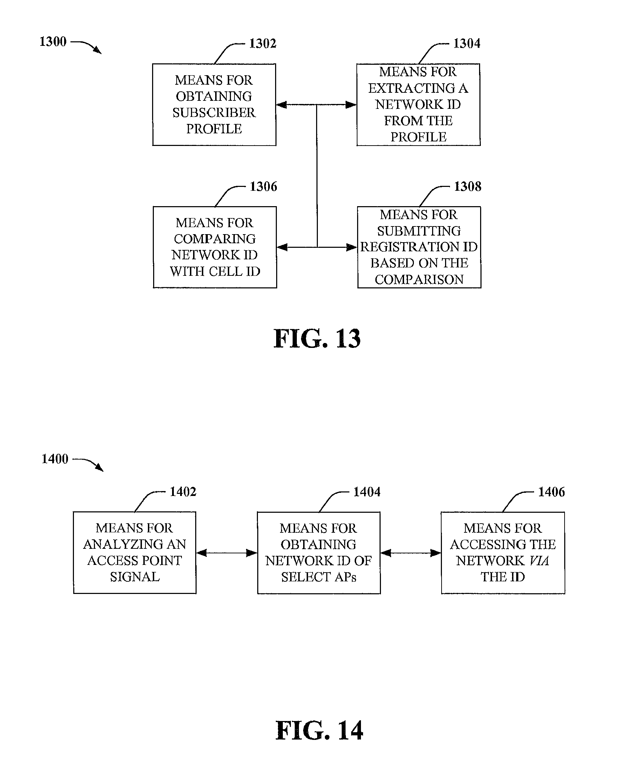

**Figs. 13** and **14** depict block diagrams of example systems 1300, 1400 that facilitate access and implement access, respectively, of a remote device to specialized access points of a mobile network, as described herein. For example, systems 1300, 1400 can reside at least partially within a wireless communication network and/or within a transmitter such as a node, base station, access point, user terminal, personal computer coupled with a mobile interface card, or the like. It is to be appreciated that systems 1300, 1400 are represented as including functional blocks, which can be functional blocks that represent functions implemented by a processor, software, or combination thereof (*e.g*., firmware).

System 1300 can facilitate UT access to specialized access points of a wireless network and reduce overhead signaling in mixed deployments of specialized access points and macro BSs. System 1300 can comprise a means 1302 for obtaining subscriber profile information associated with a UT. Such a means 1302 can comprise a transceiver that obtains a wireless signal from the UT, as well as a signal processor that can parse the signal to identify and extract the profile information. In other examples, the means 1302 can comprise a data query means that employs a signaling interface to communicate with components of a core mobile network. The query means can obtain the profile information from an HLR, or analogous component, maintained by a network operator providing wireless services for the UT.

In addition to the foregoing, system 1300 can comprise a means 1304 for extracting a network region ID (*e.g*., Registration Area Identifier) from a subscriber profile. In particular, the means 1304 can parse the profile for a PLMN ID reserved for a type of specialized network access points, as described herein. The Registration Area ID can indicate a region in which a select group of such specialized access points is located. A means 1306 for comparing the network Registration Area ID with a cell ID can determine whether a cell associated with system 1300 matches the network Registration Area ID. If so, a means 1308 for submitting the Registration Area ID can transmit such ID to the UT, to facilitate accessing the specialized access points within the identified region. In some aspects, the means 1308 can further equate the reserved PLMN ID to an operator's PLMN ID, obtained from the subscriber profile. Accordingly, the UT can interface with the specialized access points in substantially similar manner as performed with the operator's macro BSs.

System 1400 can provide regional access to specialized access points of a mobile network. The system 1400 can comprise a means 1402 for submitting a network access request to a suitable access point of the network. The means 1402 can comprise, for instance, a wireless transceiver configured to wirelessly communicate with such access point. In addition, a means 1404 for obtaining a network ID of select access points can analyze data received in response to the access request. Particularly, the means 1404 can determine whether the access point is an RA or GA access point, determine an operator's PLMN ID, determine one or more Registration Area IDs, and determine one or more specialized access point IDs reserved for a particular type of access point, where such information is included in the response. In addition to the foregoing, system 1400 can comprise a means 1406 for employing the received information in accessing the mobile network. Specifically, the means 1406 can utilize the specialized access point ID if a Registration Area ID matches a region in which the access point is located. In such case, means 1406 can employ the specialized access point ID to filter wireless signals obtained by system 1400. The filtering can be utilized to determine a preferred type of access point for connecting to the mobile network, facilitating improved network loading and/or utilization of beneficial services or rate plans offered by the preferred type of access point.

What has been described above includes examples of aspects of the claimed subject matter. It is, of course, not possible to describe every conceivable combination of components or methodologies for purposes of describing the claimed subject matter, but one of ordinary skill in the art may recognize that many further combinations and permutations of the disclosed subject matter are possible. Accordingly, the disclosed subject matter is intended to embrace all such alterations, modifications and variations that fall within the spirit and scope of the appended claims. Furthermore, to the extent that the terms "includes," "has" or "having" are used in either the detailed description or the claims, such terms are intended to be inclusive in a manner similar to the term "comprising" as "comprising" is interpreted when employed as a transitional word in a claim.

Further preferred embodiments of the invention include:
1. A method of providing regional access in a wireless network, comprising:
   obtaining subscriber profile information pertaining to a user terminal (UT);
   extracting data representing a network region from the information;
   comparing the network region to data associated with a cell of a wireless network; and
   submitting an identifier associated with selected access points of the wireless network to the UT if the network region matches a network region of the cell.
2. The method of embodiment 1, further comprising providing the identifier as an equivalent of a public land mobile network (PLMN) identifier (ID) of a network operator associated with the UT.
3. The method of embodiment 1, wherein the identifier is a specialized PLMN ID associated with the selected access points, and the selected access points are home Node Bs (HNBs).
4. The method of embodiment 1, further comprising obtaining the subscriber profile information upon receiving a network access request from the UT.
5. The method of embodiment 1, further comprising employing a closed subscriber group (CSG) of the cell to verify whether the UT is authorized to access the wireless network *via* the cell.
6. The method of embodiment 5, further comprising denying network access to the UT if the UT is not authorized to access the cell, and submitting a delay parameter to the UT that requires the UT to ignore access points associated with the identifier for a delay period.
7. The method of embodiment 1, extracting data representing a network region further comprises obtaining Regional Subscription Data (RSD) associated with the UT, the RSD identifies the selected access points.
8. The method of embodiment 1, extracting data representing a network region further comprises obtaining a Regional Zone Code (RZC) that supports area restricted roaming.
9. The method of embodiment 1, further comprising verifying that the UT is associated with an active subscription that allows service from at least one of the selected access points.
10. The method of embodiment 1, further comprising submitting a parameterization set that increases a likelihood that the UT searches for, accesses or hands off to at least one of the selected access points, or decreases a likelihood that the UT searches for, access or hands off to access points of a different type than the selected access points.
11. The method of embodiment 1, further comprising obtaining the subscriber profile information *via* a signaling interface to an operator's core network.
12. An apparatus that provides selective regional access to a wireless network, comprising:
   a query module that obtains subscriber profile information pertaining to a UT;
   an analysis module that extracts data representing a network region from the information, and compares the extracted network region to data associated with a cell of a wireless network; and
   a communication processor that submits an identifier associated with selected access points of the wireless network to the UT if the network region matches a region of the cell.
13. The apparatus of embodiment 12, the communication processor establishes the identifier as an equivalent of a PLMN ID of a network operator associated with the UT.
14. The apparatus of embodiment 12, wherein:
   the selected access points comprise an HNB network, a fractional re-use network, a sub-macro power network or a sub-macro cell network; and
   the identifier is a PLMN ID reserved for access points of the HNB, fractional re-use, sub-macro power or sub-macro cell, respectively, network.
15. The apparatus of embodiment 12, further comprising a registration module that extracts an ID of the UT from an access request included in a wireless signal initiated by the UT, and submits the ID to the query module to obtain the subscriber profile information.
16. The apparatus of embodiment 15, wherein the registration module verifies whether the UT is authorized to obtain service from the cell by comparing the ID of the UT to a CSG associated with the cell.
17. The apparatus of embodiment 15, wherein the registration module verifies whether the UT is associated with an active subscription related to the selected access points.
18. The apparatus of embodiment 12, further comprising a restriction module that submits a delay parameter to the UT if the UT is not authorized to access the cell, the delay parameter requires the UT to ignore access points associated with the identifier for a delay period.
19. The apparatus of embodiment 12, the analysis module extracts RSD that identifies the selected access points from the subscriber profile information.
20. The apparatus of embodiment 12, wherein:
   the analysis module extracts an RZC related to area restricted roaming from the subscriber profile information; and
   the communication processor compares an RZC of the cell to the extracted RZC to determine whether the network region matches the network region of the cell.
21. The apparatus of embodiment 12, further comprising a selective access module that submits a set of parameters to the UT that increases a probability that the UT will search for, access or hand off to at least one of the selected access points, or decreases a probability that the UT will search for, access or hand off to macro network base stations.
22. The apparatus of embodiment 12, further comprising a signaling interface to components of a core mobile communication network, the query module obtains the subscriber profile information *via* the signaling interface.
23. An apparatus that provides regional access in a wireless network, comprising:
   means for obtaining subscriber profile information pertaining to a UT;
   means for extracting data representing a network region from the information;
   means for comparing the network region to data associated with a cell of a wireless network; and
   means for submitting an identifier associated with selected access points of the wireless network to the UT if the network region matches a network region of the cell.
24. At least one processor configured to provide regional access in a wireless network, comprising:
   a first module configured to obtain subscriber profile information pertaining to a UT;
   a second module configured to extract data representing a network region from the information;
   a third module configured to compare the network region to data associated with a cell of a wireless network; and
   a fourth module configured to submit an identifier associated with selected access points of the wireless network to the UT if the network region matches a network region of the cell.
25. A computer program product, comprising:
   a computer-readable medium, comprising:
      a first set of codes for causing a computer to obtain subscriber profile information pertaining to a UT;
      a second set of codes for causing the computer to extract data representing a network region from the information;
      a third set of codes for causing the computer to compare the network region to data associated with a cell of a wireless network; and
      a fourth set of codes for causing the computer to submit an identifier associated with selected access points of the wireless network if the network region matches a network region of the cell.
26. A method for obtaining regional access to a wireless network, comprising:
   obtaining an identifier associated with a particular type of wireless network access point; and
   selecting an access point associated with the identifier to access the wireless network if a current region of a requesting device matches a region of the selected access point.
27. The method of embodiment 26, further comprising employing the identifier as an equivalent PLMN ID of a mobile operator.
28. The method of embodiment 26, further comprising maintaining a set of home region IDs associated with subscription-based wireless services, the home region IDs define one or more geographic or network regions in which the wireless services are available or are preferred.
29. The method of embodiment 28, further comprising verifying that the identifier is one of the set of home region IDs.
30. The method of embodiment 29, further comprising conditioning accessing the wireless network on the identifier matching one of the set of home region IDs.
31. The method of embodiment 26, further comprising tracking a cell ID of the selected access point if an access request to such access point is denied.
32. The method of embodiment 26, further comprising employing a delay parameter to refrain from searching for or signaling access points associated with the identifier for a delay period defined by the delay parameter if an access request to one of the select access points is denied.
33. The method of embodiment 26, further comprising switching to a cell hierarchy level utilized at least in part by base stations of the wireless network other than the particular type of access points if the access request is denied.
34. The method of embodiment 26, further comprising storing a cell ID of the at least one select access point if an access request to such access point is approved.
35. The method of embodiment 26, further comprising tracking a position location of a requesting UT if accessing the wireless network is approved, and correlating the position location with a permissible access location to the select access points.
36. The method of embodiment 26, further comprising obtaining a set of parameters that weights a likelihood of searching for, accessing or handing off to the particular type of access points in lieu of an access point of the wireless network not associated with the identifier.
37. A UT configured to obtain regional access to a wireless network, comprising:
   a signal processor that obtains an identifier associated with a particular type of wireless network access point; and
   an access module that selects an access point associated with the identifier to access the wireless network if a region in which the UT is located matches a region of the selected access point.
38. The UT of embodiment 37, further comprising a filtering module that references the identifier against a set of home region IDs associated with one or more geographic or network regions that provide subscription-based services or preferred services to the UT.
39. The UT of embodiment 38, the identifier is a registration area identifier, location area identifier (LAI), a routing area identifier (RAI), a tracking area ID (TAI), or an RZC of the wireless network.
40. The UT of embodiment 38, wherein the filtering module employs the identifier as an equivalent of a network operator PLMN ID if the identifier matches one of the set of home region IDs.
41. The UT of embodiment 37, further comprising a connectivity tracking module that records at least one of:
   a cell ID or location data of the access point if the access request is denied; or
   a cell ID or location data of the access point if the access request is approved.
42. The UT of embodiment 37, further comprising a timing module that imposes a delay time on subsequent signaling to access points associated with the identifier if the access request is denied.
43. The UT of embodiment 37, further comprising a location tracking module that obtains an access location of the UT if the access request is approved or is denied.
44. The UT of embodiment 43, wherein a connectivity tracking module correlates the access location to at least one of:
   a restricted access location if the request is denied; or
   a current registration area if the request is approved.
45. The UT of embodiment 37, further comprising a parsing module that scans a received wireless signal initiated at the selected access point for data identifying whether a Registration Area associated with such access point is a restricted registration area or general access registration area.
46. The UT of embodiment 37, wherein the access module searches, accesses or hands off to an access point not associated with the identifier after determining that access points associated with the identifier are not currently suitable for communication with the wireless network.
47. The UT of embodiment 46, the access module searches for inter-frequency or intra-frequency cells utilized by access points associated with the identifier before determining that access points associated with the identifier are not currently suitable for the communication.
48. An apparatus configured to obtain regional access to a wireless network, comprising:
   means for obtaining an identifier associated with a particular type of wireless network access point; and
   means for selecting an access point associated with the identifier to access the wireless network if a current region of a requesting device matches a region of the selected access point.
49. At least one processor configured to obtain regional access to a wireless network, comprising:
   a first module configured to obtain an identifier associated with a particular type of wireless network access point; and
   a second module configured to select an access point associated with the identifier to access the wireless network if a current region of a requesting device matches a region of the selected access point.
50. A computer program product, comprising:
   a computer-readable medium, comprising:
      a first set of codes for causing a computer to obtain an identifier associated with a particular type of wireless network access point; and
      a second set of codes for causing the computer to select an access point associated with the identifier to access the wireless network if a current region of a requesting device matches a region of the selected access point.

## Claims

1. A method for obtaining regional access to a wireless network, comprising:
obtaining an identifier associated with a particular type of wireless network access point; and
selecting an access point associated with the identifier to access the wireless network if a current region of a requesting device matches a region of the selected access point.

2. The method of claim 1, further comprising employing the identifier as an equivalent PLMN ID of a mobile operator.

3. The method of claim 1, further comprising maintaining a set of home region IDs associated with subscription-based wireless services, the home region IDs define one or more geographic or network regions in which the wireless services are available or are preferred.

4. The method of claim 3, further comprising verifying that the identifier is one of the set of home region IDs.

5. The method of claim 4, further comprising conditioning accessing the wireless network on the identifier matching one of the set of home region IDs.

6. An apparatus configured to obtain regional access to a wireless network, comprising:
means for obtaining an identifier associated with a particular type of wireless network access point; and
means for selecting an access point associated with the identifier to access the wireless network if a current region of a requesting device matches a region of the selected access point.

7. At least one processor configured to obtain regional access to a wireless network, comprising:
a first module configured to obtain an identifier associated with a particular type of wireless network access point; and
a second module configured to select an access point associated with the identifier to access the wireless network if a current region of a requesting device matches a region of the selected access point.

8. A computer program product, comprising:
a computer-readable medium, comprising:
set of codes for causing at least one computer to perform a method according to one of the claims 1 to 5 when executed.
